# EUROPEAN PATENT SPECIFICATION

(11) **EP 1 886 216 B1**
(45) Date of publication and mention of the grant of the patent: **04.08.2010**
(21) Application number: 06763160.6
(22) Date of filing: 16.05.2006
(51) Int. Cl.: G06F 9/38

(54) **CONTROLLING OUT OF ORDER EXECUTION PIPELINES USING SKEW PARAMETERS**
STEUERUNG VON AUSSERREIHENFOLGE-AUSFÜHRUNGS-PIPELINES UNTER VERWENDUNG VON VERSATZPARAMETERN
CONTROLE DE PIPELINES D'EXECUTION HORS SERVICE AU MOYEN DE PARAMETRES DE DESALIGNEMENT

(30) Priority: 16.05.2005 US 130552
(43) Date of publication of application: 13.02.2008
(73) Proprietor: Infineon Technologies AG, 85579 Neubiberg (DE)
(72) Inventor: ARNOLD, Roger, Sunnyvale, California 94087 (US); HASTIE, Neil Stuart, Lydney Gloucestershire GL15 6NS (GB); NORDEN, Erik, 81667 München (DE); OBER, Robert E., San Jose, California 95126 (US)
(74) Representative: Jannig, Peter
(86) International application number: PCT/EP2006/062356
(87) International publication number: WO 2006/122941

(56) References cited:
- EP-A- 1 315 083
- US-A- 5 941 983
- US-B2- 6 859 873

## Description

### FIELD OF THE INVENTION

The present invention relates to pipelined processing systems, and more particularly to a method and apparatus for controlling out of order execution pipelines.

### BACKGROUND OF THE INVENTION

Modern computer systems utilize a variety of different microprocessor architectures to perform program execution. Each microprocessor architecture is configured to execute programs made up of a number of macro instructions and micro instructions. Many macro instructions are translated or decoded into a sequence of micro instructions before processing. Micro instructions are simple machine instructions that can be executed directly by a microprocessor.

To increase processing power, most microprocessors use multiple pipelines, such as integer pipelines and load/store pipelines to process the macro and micro instructions. Typically, an integer pipeline consists of multiple stages. Each stage in an integer pipeline operates in parallel with the other stages. However, each stage operates on a different macro or micro instruction.

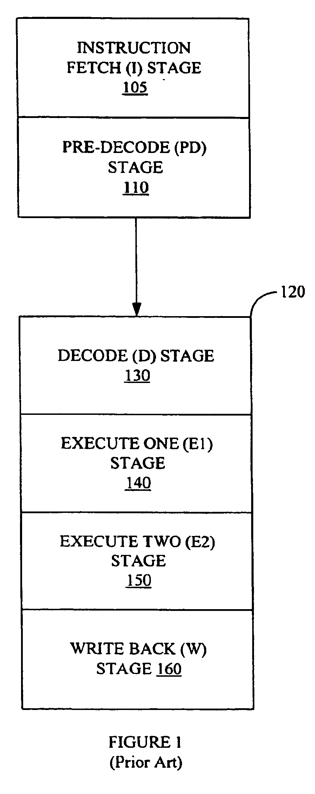

Figure 1 shows an instruction fetch and issue unit, having an instruction fetch stage (I stage) 105 and a pre-decode stage (PD stage) 110, coupled to a typical four stage integer pipeline 120 for a microprocessor. Integer pipeline 120 comprises a decode stage (D stage) 130, an execute one stage (E1 stage) 140, an execute two stage (E2 stage) 150, and a write back stage (W stage) 160. Instruction fetch stage 105 fetches instructions to be processed. Pre-decode stage 110 groups and issues instructions to one or more pipelines. Ideally, instructions are issued into integer pipeline 120 every clock cycle. Each instruction passes through the pipeline and is processed by each stage as necessary. Thus, during ideal operating conditions integer pipeline 120 is simultaneously processing 4 instructions. However, many conditions as explained below may prevent the ideal operation of integer pipeline 120.

Decode stage 130 decodes the instruction and gathers the source operands needed by the instruction being processed in decode stage 130. Execute one stage 140 and execute two stage 150 performs the function of the instructions. Write back stage 160 writes the appropriate result value into the register file. Pipeline 120 can be enhanced by including forwarding paths between the various stages of integer pipeline 120 as well as forwarding paths between stages of other pipelines. For brevity and clarity forwarding paths, which are well known in the art, are not described in detail herein.

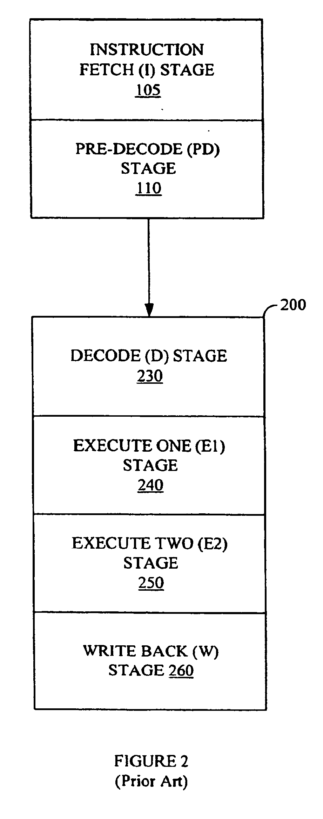

Figure 2 shows a typical four stage load/store pipeline 200 for a microprocessor coupled to instruction fetch stage 105 and pre-decode stage 110. Load/store pipeline 200 includes a decode stage (D stage) 230, an execute one stage (E1 stage) 240, an execute two stage (E2 stage) 250, and a write back stage (W stage) 260. Load/store pipeline 200 is specifically tailored to perform load and store instructions. By including both a load/store pipeline and an integer pipeline, overall performance of a microprocessor is enhanced because the load/store pipeline and integer pipelines can perform in parallel. Many processors may even include multiple load/store pipelines, multiple integer pipelines, as well as other pipelines to further increase processing power. Decode stage 230 decodes the instruction and reads the register file for the needed information regarding the instruction. Execute one stage 240 calculates memory addresses for the load or store instructions. For store instructions, execute two stage 250 stores the appropriate value into memory. For load instructions, execute two stage 250 retrieves information from the appropriate location. For register load operations, write back stage 260 writes the appropriate value into a register file.

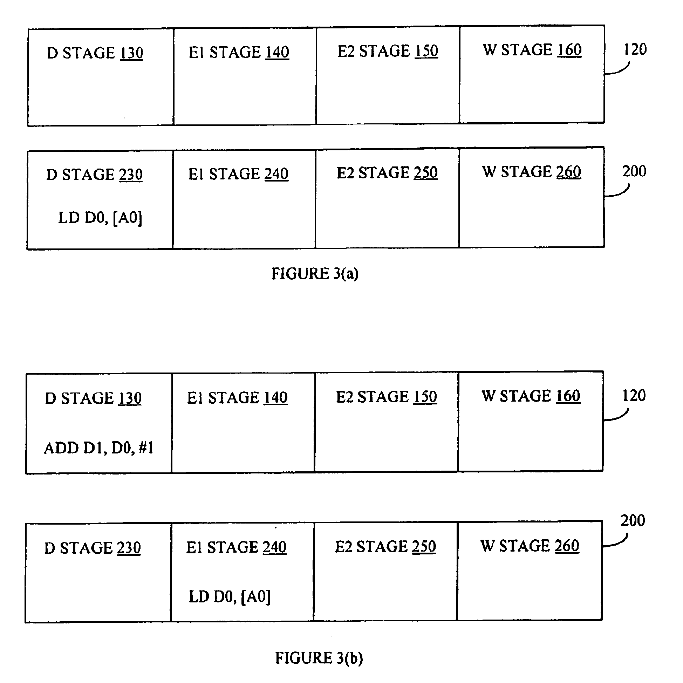

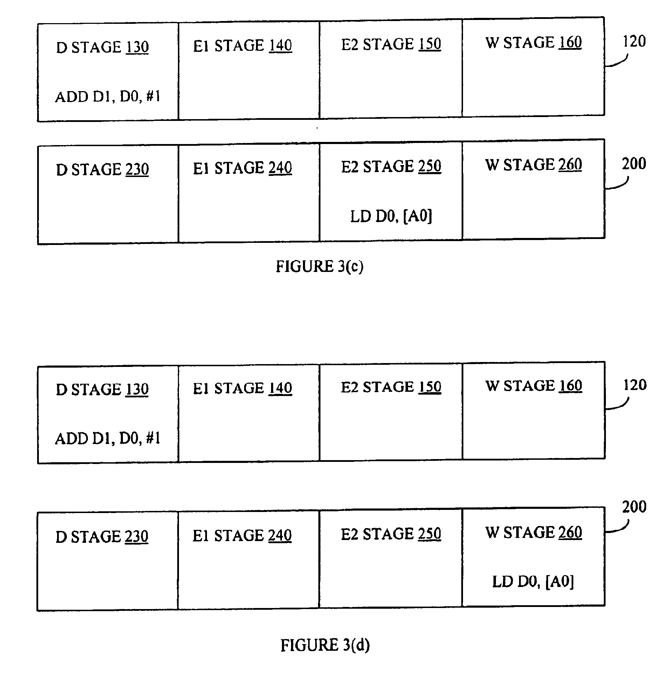

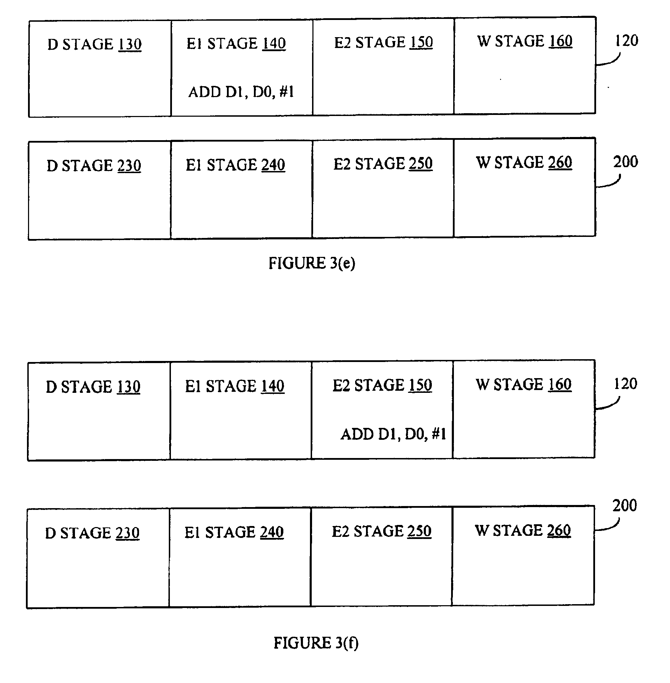

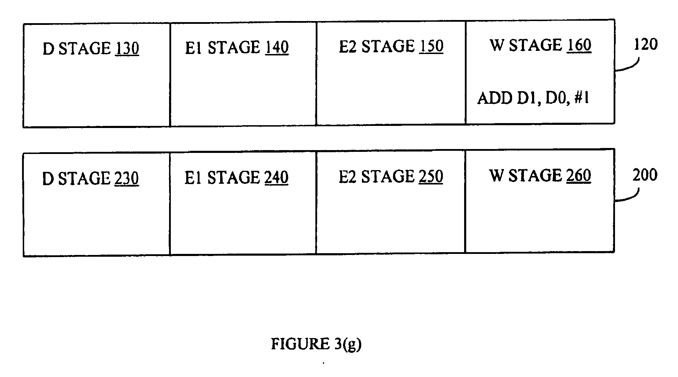

Ideally, integer pipeline 120 and load/store pipeline 200 can execute instructions every clock cycle. However, many situations may occur that causes parts of integer pipeline 120 or load/store pipeline 200 to stall, which degrades the performance of the microprocessor. Figs. 3(a)-3(f) illustrate a load-use data dependency problem, which causes parts of integer pipeline 120 to stall. Load-use data dependency problems are caused by the issuance of a load instruction followed by an instruction that requires the data being loaded by the load instruction. Specifically, Figs. 3(a)-3(f) illustrate an instruction "LD D0, [A0]" followed by an instruction "ADD D1, D0, #1". "LD D0, [A0]" causes the value at address A0 to be loaded into data register D0. "ADD D1, D0, #1" adds one to the value in data register D0 and stores the result in data register D1. Thus, the add instruction requires the data (the new value of data register D0) from the load instruction to properly calculate the new value for data register D1. For clarity, Figs. 3(a)-3(f) omit instruction fetch stage 105 and pre-decode stage 110. To avoid confusion, only two instructions are shown in Figs. 3(a)-3(f). In actual use other instructions would usually be processed simultaneously in other stages of the pipelines. As shown in Fig 3(a), instruction "LD D0, [A0]" is first processed in decode stage 230 of load/store pipeline 200. Then, as shown in Fig 3(b), instruction "LD D0, [A0]" is processed in execute one stage 240 of load/store pipeline 200 and instruction "ADD D1, D0, #1" is processed in decode stage 130 of integer pipeline 120.. If instruction "ADD D1, D0, #1" were allowed to propagate through integer pipeline 120, the current value in data register D0 would be used in the add instruction rather than the new value to be loaded from address A0. Thus, decode stage 130, which is configured to detect load-use data dependency problems, holds instruction "ADD D1, D0, #1" in decode stage 130. Because decode stage 130 is full, a pipeline stall at decode stage 130 of integer pipeline 120 occurs. Thus, pre-decode stage 110 could not issue additional instructions into integer pipeline 120.

Then, as shown in Fig 3(c), instruction "LD D0, [A0]" is processed in execute two stage 250 of load/store pipeline 200. If instruction "ADD D1, D0, #1" were allowed to propagate through integer pipeline 120, the current value in data register D0 would be used in the add instruction rather than the new value to be loaded from address A0. Thus, decode stage 130, which is configured to detect load-use data dependency problems, holds instruction "ADD D1, D0, #1" in decode stage 130. Because decode stage 130 is full, a pipeline stall at decode stage 130 of integer pipeline 120 occurs. Thus, pre-decode stage 110 could not issue additional instructions into integer pipeline 120.

In most microprocessors, timing constraints prohibit forwarding from execute two stage 250. Thus, as shown in Fig 3(d), instruction "ADD D1, D0, #1" remains in decode stage 130 when instruction "LD D0, [A0]" proceeds to write back stage 260.

After instruction "LD D0, [A0]" is processed in write stage 260 the new value for data register D0 becomes available and integer pipeline can process instruction "ADD D1, D0, #1". Therefore, as shown in Figs. 3(e), 3(f) and 3(g), after the new data value for data register D0 is available, instruction "ADD D1, D0, #1" is processed through execute one stage 140, execute two stage 150 and write back stage 160.

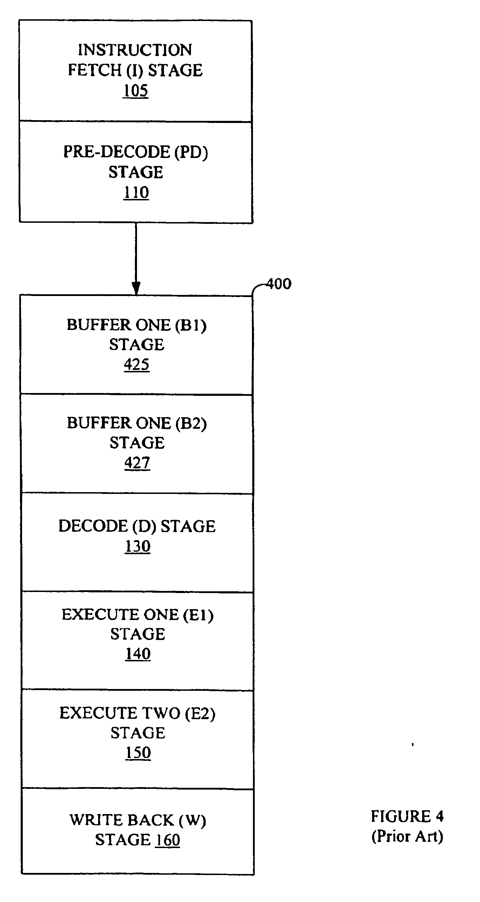

As explained above stalling a pipeline or parts of a pipeline degrades the overall processing power of a microprocessor. Because load-use data dependency problems are quite common, integer pipelines have been modified to process load-use instructions without stalling. Fig. 4 illustrates an integer pipeline 400 coupled to instruction fetch stage 105 and pre-decode stage 110. Integer pipeline can be used with load/store pipeline 200 to avoid stalling on load-use instructions. Integer pipeline 400, which is similar to integer pipeline 120, includes all the stages of integer pipeline 120 and adds two buffer stages. Specifically, integer pipeline includes a buffer one stage (B1 stage) 425 and a buffer two stage (B2 stage) 427 preceding decode stage 130. Generally, no processing is performed in buffer one stage 425 and buffer two stage 427. However, in some microprocessors some pre-decoding is performed in buffer one stage 425 and buffer two stage 427. For consistency similar parts performing similar functions in different figures are given the same reference numerals. Thus, decode stage 130 is used in both integer pipeline 120 of Fig. 1 and integer pipeline 400 of Fig. 4.

Figs. 5(a)-(f) illustrate the processing of instruction "LD D0, [A0]" followed by the instruction "ADD D1, D0, #1" using integer pipeline 400 and load/store pipeline 200. As shown in Fig 5(a), instruction "LD D0, [A0]" is first processed in decode stage 230 of load/store pipeline 200 and instruction. Then, as shown in Fig 5(b), instruction "LD D0, [A0]" is processed in execute one stage 240 of load/store pipeline 200 and instruction "ADD D1, D0, #11" is stored in buffer one stage 425 of integer pipeline 400. Then, as shown in Fig 5(c), instruction "LD D0, [A0]" is processed in execute two stage 250 of load/store pipeline 200 and instruction "ADD D1, D0, #1" is stored in buffer 2 stage 427 of integer pipeline 400. As shown in Fig. 5(d), instruction "LD D0, [A0]" is next processed in write back stage 260 and instruction "ADD D1, D0, #1"proceeds to decode stage 130. As explained above, the new value for data register D0 becomes available when instruction "LD D0, [A0]" is processed by write back stage 260. Thus as shown in Fig. 5(e), instruction "ADD D1, D0, #1" can proceed to execute 1 stage 140 without stalling integer pipeline 400. As shown in Figs. 5(f) and 5(g), instruction "ADD D1, D0, #1" is processed through execute two stage 150 and write back stage 160.

Thus, including buffer one stage 425 and buffer two stage 427 allows integer pipeline 400 to avoid stalling on load-use data dependency problems. However, using buffer one stage 425 and buffer two stage 427 increases the latency of integer pipeline 400 because an instruction must pass through six stages of integer pipeline 400 rather than the four stages of integer pipeline 120. Furthermore, longer integer pipelines suffer delays on several other types of pipeline stalls. For example, speculative execution caused by conditional branching instruction may cause pipeline stalls. A typical conditional branch instruction has the form: If {branch condition is satisfied} then jump to the instruction at the {branch address}. For example the macro instruction "JZ 100" can be interpreted as: if {the operand of the preceding instruction was zero} then jump to the instruction at {address 100}. To avoid pipeline stalls, most processors selects an outcome for the conditional branch instruction and processes instructions as if the selected outcome is correct. Actual determination of the conditional branch condition does not occur until execute one stage 140 or execute two stage 150. Thus, in longer pipelines, determination of the result of the conditional branch instruction is delayed as compared to shorter pipelines. Specifically, each buffer stage delays determination of the conditional branch instruction by one clock cycle. Thus, the performance of integer pipeline 400 on conditional branch instruction is worse than the performance of integer pipeline 120. In addition, a mixed register instruction which uses the data register file of the integer pipeline and the execution stages of the load/store pipeline would cause stalls due to the delays caused by the buffer one stage and the buffer two stage. Especially, if the mixed register instruction has a data register as a destination and a following integer instruction is using this value, then the integer instruction needs to stall. Thus, the conventional solution to avoid load-use data dependency problems, degrades performance for other instruction types and may reduce the overall processing speed of the microprocessor. Hence there is a need for an integer pipeline that can avoid load-use data dependency problems while minimizing problems associated with long integer pipelines.
A processor comprising a first-type pipeline having a plurality of first-type pipeline stages, a second-type pipeline having a plurality of second-type pipeline stages, and means four simultaneously issuing a first first-type instruction into a first first-type pipeline stage and a first second-type instruction into a first second-type pipeline stage, i.e. a processor according to the preamble of claim 19, as well as a method for operating such a processor, i.e. a method according to the preamble of claim 1 are also known from document EP 1 315 083 A. Document EP 1 315 083 A does, however, not diclose any possibilities for solving the above mentioned problems.

### SUMMARY

The above mentioned problems can be solved by provoding a processor comprising the features claimed in claim 19, and by a method comprising the features claimed in claim 1, respectively. Accordingly, a variable length instruction pipeline in accordance with on embodiment of the present invention includes expansion stages which can be inserted into an instruction pipeline to avoid load-use data dependency problems and removed from the instruction pipeline when not needed to minimize problems associated with long instruction pipelines. A pipeline skew parameter is included in each stage of the integer pipeline and the load store pipeline to track how far ahead or how far behind an instruction is compared to other instructions that were issued simultaneously.

For example, in one embodiment of the present invention, a processor has at least one integer pipeline having multiple integer pipeline stages and at least one load store pipeline having multiple load/store pipeline stages. A first integer instruction and a first load/store instruction are simultaneously issued to a first integer pipeline stage and a first load/store pipeline stage, respectively. A first integer skew parameter and a first load/store skew parameter are generated and stored in the first integer pipeline stage and the first load/store pipeline stage, respectively.

The first integer skew parameter propagates through the integer pipeline with the first integer instruction. Similarly, the first load/store skew parameter propagates through the load/store pipeline with the first load/store instruction. The first integer skew parameter is incremented when the first load/store instruction propagates down the load/store pipeline and the first integer instruction is stalled in the integer instruction. Conversely, the first integer skew parameter is decremented when the first integer instruction propagates down the integer pipeline and the first load/store instruction is stalled in the load/store pipeline. The pipeline skew parameters are used to improve data hazard detection, pipeline stalling, and instruction cancellation.

In another embodiments of the present invention, issue tags are used to generate the propagation skew parameters. Specifically, when the first integer instruction and the first load/store instruction are simultaneously issued, a first integer issue tag and a first load/store issue tag are generated and stored with the first integer instruction and first load/store instruction, respectively. In general the newly generated integer issue tag and load/store issue tag are identical. However the newly generated integer issue tag is unique relative to other integer issue tags in the integer pipeline. The first integer issue tag propagates through the integer pipeline with the first integer instruction. Similarly, the first load/store issue tag propagates through the load/store pipeline with the first load/store instruction. The issue tags are used to generate pipeline skew parameters, which can be used to improve data hazard detection, pipeline stalling, and instruction cancellation.

The present invention will be more fully understood in view of the following description and drawings.

### BRIEF DESCRIPTION OF THE DRAWINGS

Fig. 1 is a simplified diagram of a conventional integer pipeline.

Fig. 2 is a simplified diagram of a conventional load/store pipeline.

Figs. 3 (a) -3 (g) illustrate the performance of an integer pipeline and a load/store pipeline.

Fig. 4 is a simplified diagram of a conventional integer pipeline.

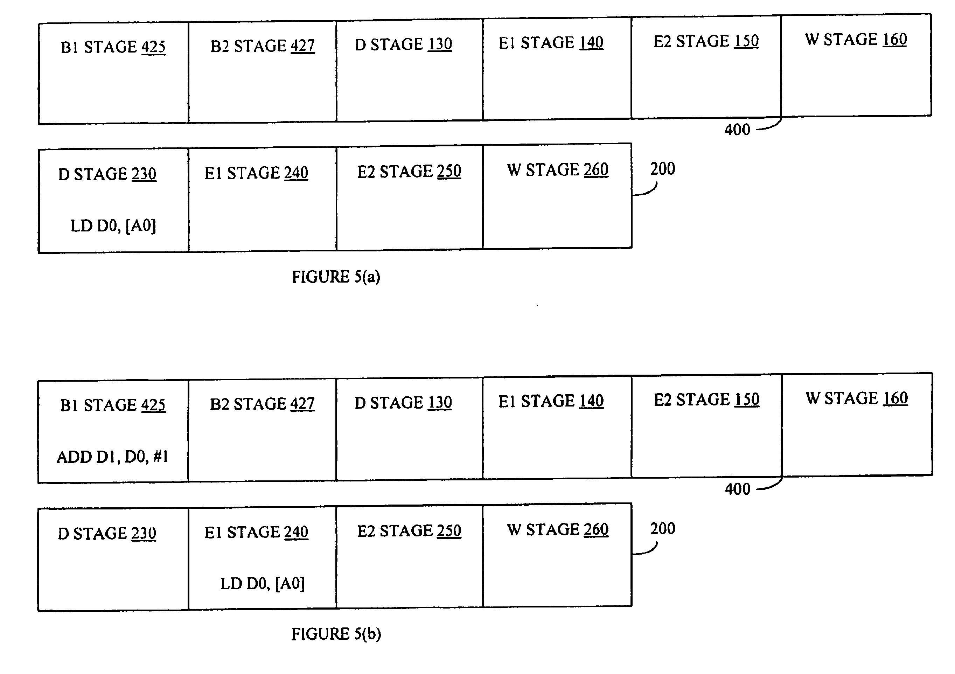

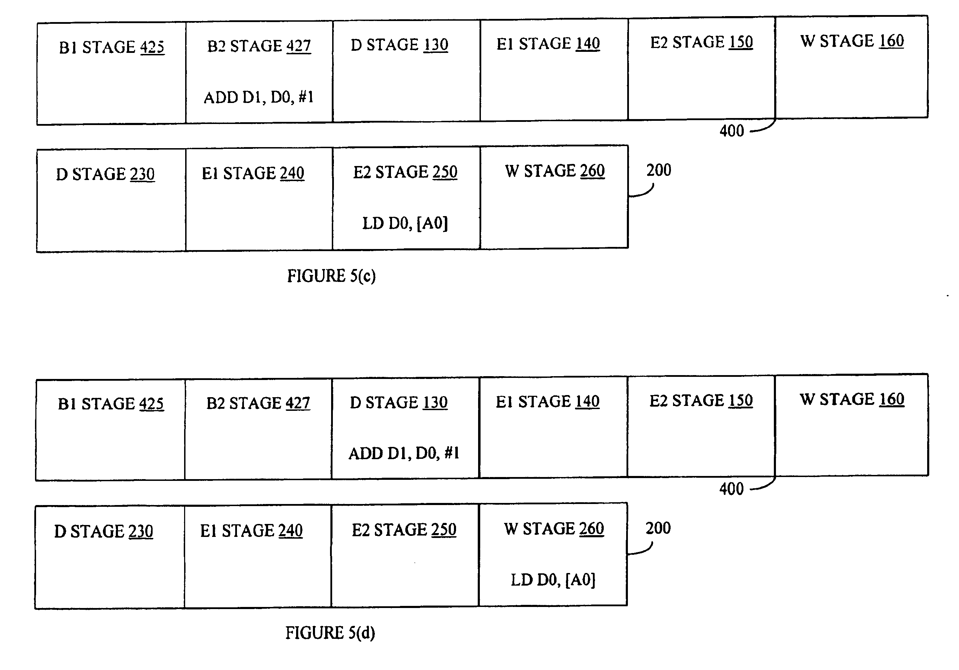

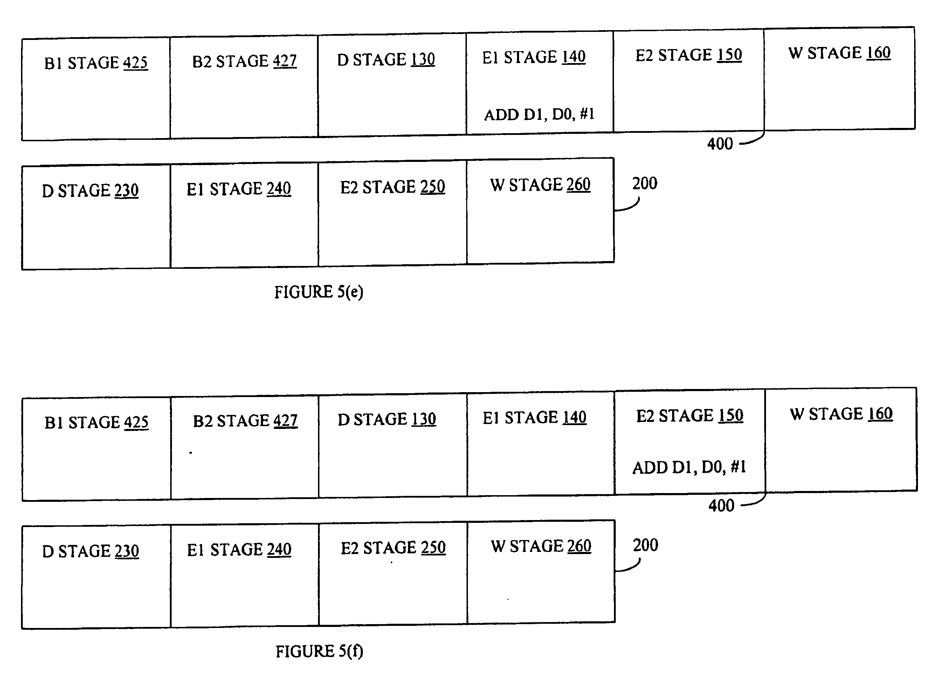

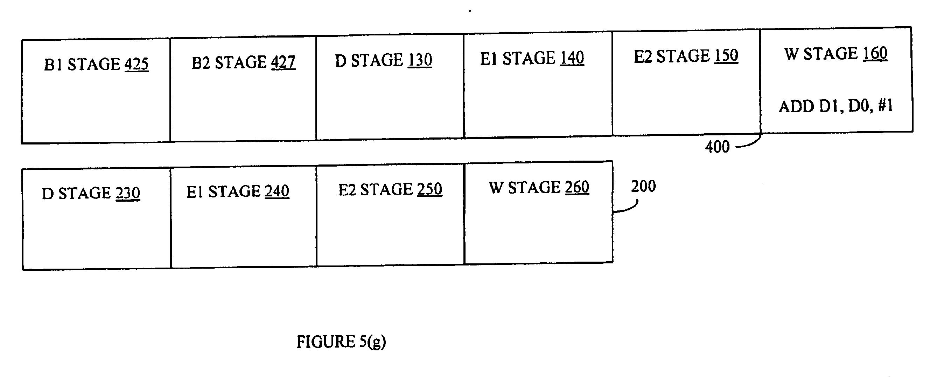

Figs. 5(a)-5(g) illustrate the performance of an integer pipeline and a load/store pipeline.

Fig. 6(a) is a block diagram of a variable length integer pipeline in accordance with one embodiment of the present invention.

Fig. 6(b) is a block diagram of a load/store pipeline in accordance with one embodiment of the present invention.

Figs. 7(a)-7(b) illustrate the performance of an integer pipeline and a load/store pipeline in accordance with one embodiment of the present invention.

Figs. 8(a)-8(c) illustrates the correspondence between stages of a load store pipeline and a variable length integer pipeline for various skew values in accordance with one embodiment of the present invention.

Fig. 9 is a block diagram of an integer pipeline and a load/store pipeline in accordance with an embodiment of the present invention that uses issues tags (ITAGs).

### DETAILED DESCRIPTION

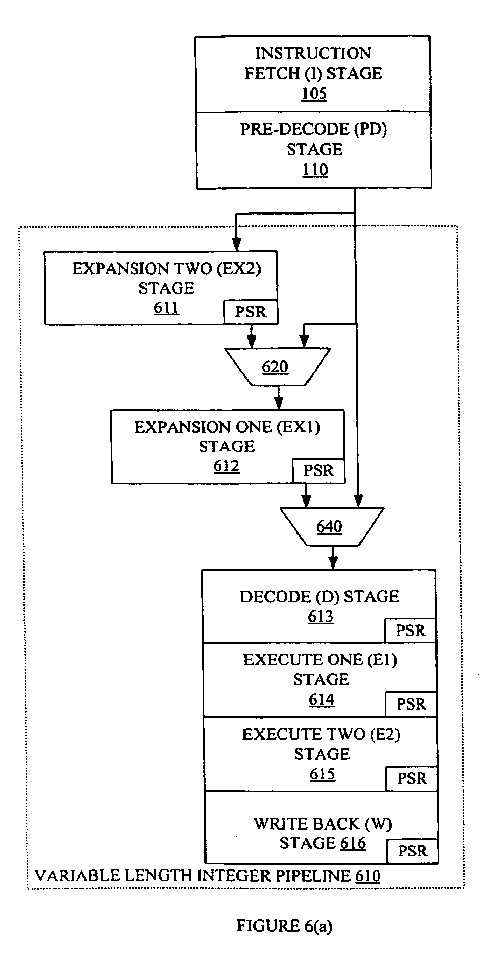

Fig. 6(a) is a block diagram of a variable length integer pipeline 610 in accordance with one embodiment of the present invention. Variable length integer pipeline 610 is coupled to instruction fetch stage 105, pre-decode stage 110 and includes decode stage 613, execute one stage 614, execute two stage 615, write back stage 616, an expansion one stage (EX1 stage) 611, an expansion two stage (EX2 stage) 612, a multiplexer 620, and an multiplexer 640. Variable length integer pipeline 610 can function as a four-stage pipeline, a five-stage pipeline or a six-stage pipeline. Other embodiments of the present invention may include more expansion stages to allow even greater flexibility. Furthermore, some embodiments of the present invention may use only a single expansion stage. For clarity, the examples described herein use a variable length integer pipeline, however the principles of the present invention can be adapted for use with any type of instruction pipelines.

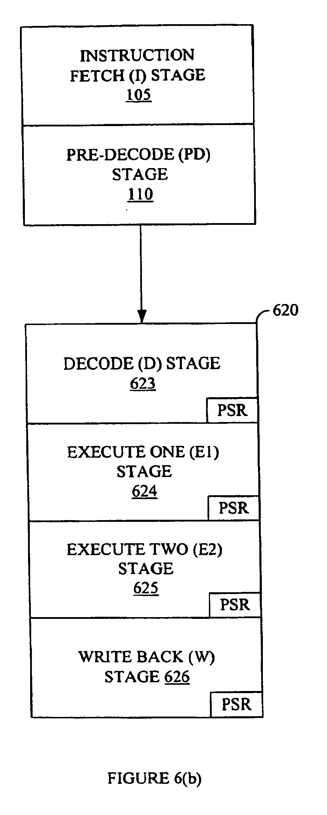

Due to the variable length of the integer pipeline, a pipeline skew parameter for each instruction is used to track the skew between the integer pipeline and the load store pipeline. Specifically, the pipeline skew parameter is used to track the relative position of a load/store instruction and an integer instruction that were simultaneously issued to the load/store pipeline and the variable length integer pipeline, respectively. Each stage of variable length integer pipeline 610 as well as a load store pipeline 620 (as illustrated in Fig. 6(b) includes a pipeline skew register PSR, which stores the pipeline skew parameter of the instruction in the pipeline stage. Generation, modification and use of pipeline skew parameters are described in detail below. For clarity, in the embodiments described herein, an integer instruction that is simultaneously issued with load store instruction precedes the load/store instruction in the instruction sequence of the program. However, the principles of the present invention can be easily adapted by one skilled in the art to processors that simultaneously issue load/store instructions with an integer instruction that follows the load/store instruction.

In the four stage configuration of variable length integer pipeline 610, instructions from pre-decode stage 110 pass through decode stage 613, execute one stage 614, execute two stage 615, and write back stage 616. Instructions are passed from pre-decode stage 110 to decode stage 613 through multiplexer 640. In the five stage configuration, expansion one stage 612 is inserted in between pre-decode stage 110 and decode stage 613. Specifically, multiplexer 620 is configured to pass instructions from pre-decode stage 110 to expansion one stage 612, while multiplexer 640 is configured to pass instructions from expansion one stage 612 to decode stage 613. In the six stage configuration, expansion two stage 611 is inserted in between pre-decode stage 110 and expansion one stage 612. Specifically, Expansion two stage 611 receives instructions from pre-decode stage 110. Multiplexer 620 is configured to pass instructions from expansion two stage 611 to expansion one stage 612, and multiplexer 640 is configured to pass instructions from expansion one stage 612 to decode stage 613.

To reduce latency and to avoid problems associated with long pipelines, variable length integer pipeline 610 attempts to operate as a four-stage integer pipeline when possible. However, when a pipeline stall in decode stage 613 occurs, variable length integer pipeline 610 expands to continue accepting instructions. For example, if a load-use data dependency problem occurs, which would cause an instruction to remain in decode stage 613, variable length integer pipeline 610 would expand to include expansion one stage 612 if pre-decode stage 110 issue another instruction. Specifically, pre-decode stage 110 would be able to issue the new instruction into expansion one stage 612. Similarly, variable length integer pipeline 610 can accept an additional instruction by expanding to include expansion two stage 611 so that the instruction in pre-decode stage 110 can be issued into expansion two stage 611. In embodiments of the present invention having additional expansion stages, a variable length integer pipeline can expand to include the additional expansion stages so that pre-decode stage 110 can issue additional instructions into variable length integer pipeline 610.

When variable length integer pipeline 610 is in an expanded mode, i.e. operating with expansion stages, variable length integer pipeline 610 can contract when an instruction is processed through decode stage 613 of variable length integer pipeline 610 and no new instruction is issued to variable integer pipeline 610. Thus, in general, variable length integer pipeline 610 contracts when variable length integer pipeline is not stalled and no integer instruction is issued to variable length integer pipeline 610.

Figure 6(b) shows a four-stage load/store pipeline 620 for a microprocessor coupled to instruction fetch stage 105 and pre-decode stage 110. Load/store pipeline 620 includes a decode stage (D stage) 623, an execute one stage (E1 stage) 624, an execute two stage (E2 stage) 6250, and a write back stage (W stage) 626. As stated above each stage of load/store pipeline 620 includes a pipeline skew register PSR, which is used to store the pipeline skew parameter of the instruction in the pipe stage. Decode stage 623 decodes the instruction and reads the register file for the needed information regarding the instruction. Execute one stage 624 calculates memory addresses for the load or store instructions. For store instructions, execute two stage 625 stores the appropriate value into memory. For load instructions, execute two stage 625 retrieves information from the appropriate location. For register load operations, write back stage 626 writes the appropriate value into a register file.

As explained above, the pipeline skew parameter is used to track the relative position of a load/store instruction and an integer instruction that were simultaneously issued to the load/store pipeline and the variable length integer pipeline, respectively. Specifically, the pipeline skew parameter is defined so that decode stage 613, execute one stage 614, execute two stage 615, write back stage 616 of variable length integer pipeline 610 corresponds to decode stage 623, execute one stage 624, execute two stage 625, write back stage 626 of load/store pipeline 620. Thus, for example, when an integer instruction is in decode stage 613 and a simultaneously issued load/store instruction is in decode stage 623 the pipeline skew parameters of both instructions are zero. Similarly, when an integer instruction is in execute one stage 614 and a simultaneously issued load/store instruction is in execute one stage 624 the pipeline skew parameters of both instructions are zero.

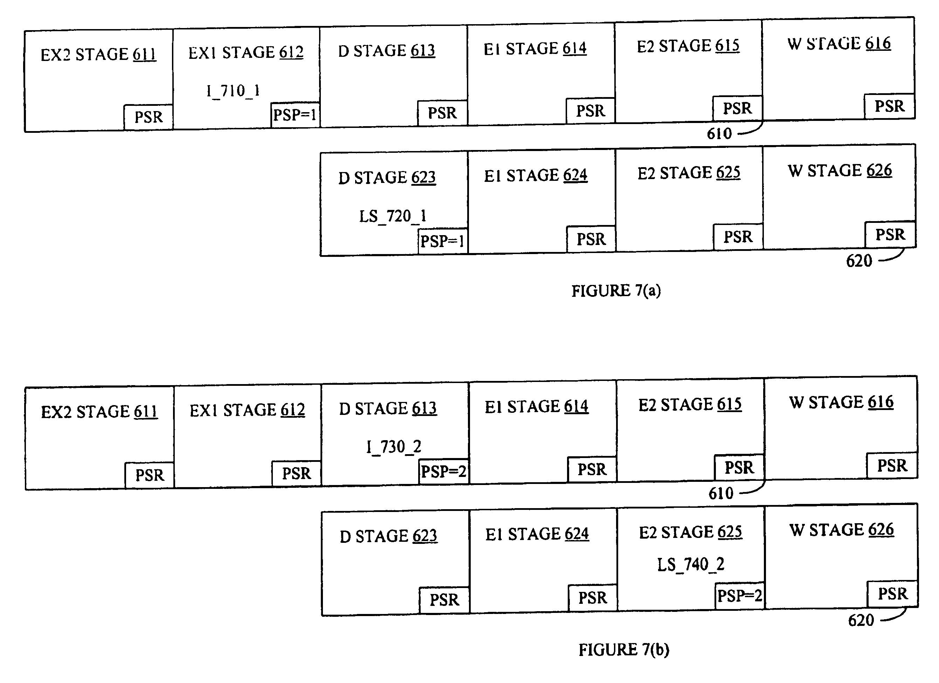

However as illustrated in Fig. 7(a), when an integer instruction I_710_1 is in expansion one stage 612 of variable length integer pipeline 610 and a simultaneously issued load/store instruction LS_720_1 is in decode stage 623 of load/store pipeline 620, the pipeline skew parameter of integer instruction I_710_1 is equal to 1 and the pipeline skew parameter of load/store instruction LS_720_1 is equal to 1. For clarity, instructions described herein may be referenced as INSTRUCTIONTYPE_NUMBER_ISSUEGROUP, where INSTRUCTIONTYPE refers to the type of instruction (e.g. I for integer, LS for load/store), NUMBER is a unique number to distinguish different instructions, and ISSUEGROUP is a group number that is assigned to each issue group. An issue group includes one or more instructions that were issued in the same cycle. Thus, integer instruction I_710_1 and load/store instruction LS_720_1 were simultaneously issued as issue group number 1. As illustrated in Fig. 7(b), when an integer instruction I_730_2 is in decode stage 613 of variable length integer pipeline 610 and a simultaneously issued load/store instruction LS_740_2 is in execute two stage 625, the pipeline skew parameters of both instructions is equal to 2. Thus, in general the pipeline skew parameter is equal to the number of pipeline stages that simultaneously issued instructions are offset in variable length integer pipeline 610 and load/store pipeline 620. For clarity, the examples described herein are for a variable length integer pipeline and a load/store pipeline; however, the principles taught herein can be adapted by one skilled in the art for use in processors having different types of pipelines and for use in processors having multiple load/store pipelines and multiple integer pipelines.

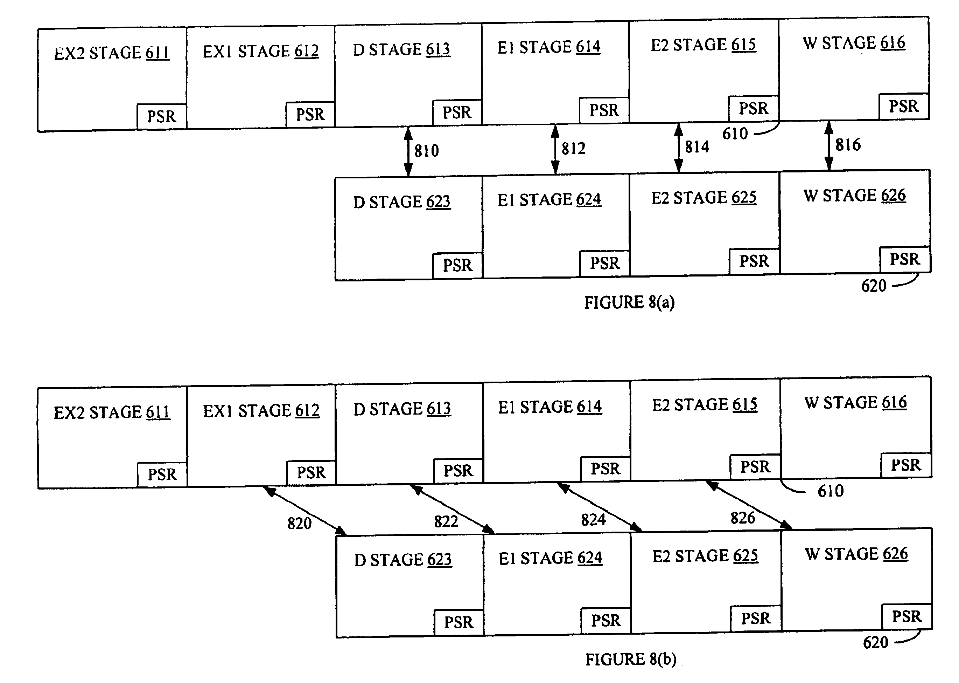

Figs. 8(a)-8(c) illustrate the skew relationship between different stages for an embodiment of the present invention. Fig. 8(a) illustrates the correspondence between stages of load store pipeline 620 and variable length integer pipeline 610 when the pipeline skew is equal to zero. As used herein a stage of the load store pipeline corresponds with a stage of the integer pipeline when the two stages contain simultaneously issued instructions. As indicated by arrow 810, decode stage 613 of variable integer pipeline 610 corresponds with decode stage 623 of load store pipeline 620 when the pipeline skew is equal to zero. Similarly, arrows 812, 814, and 816 indicates that execute one stage 614, execute 2 stage 615, and write back stage 616 of variable length integer pipeline 610 corresponds with execute one stage 624, execute 2 stage 625, and write back stage 626 of load/store pipeline 620, respectively, when the pipeline skew is equal to zero.

Fig. 8(b) illustrates the correspondence between stages of load store pipeline 620 and variable length integer pipeline 510 when the pipeline skew is equal to one. As indicated by arrow 820, expansion one stage 612 of variable integer pipeline 610 corresponds with decode stage 623 of load store pipeline 620 when the pipeline skew is equal to one. Similarly, arrows 822, 824, and 826 indicates that decode stage 614, execute one stage 614, and execute 2 stage 615 of variable length integer pipeline 610 corresponds with execute one stage 624, execute 2 stage 625, and write back stage 626 of load/store pipeline 620, respectively, when the pipeline skew is equal to one.

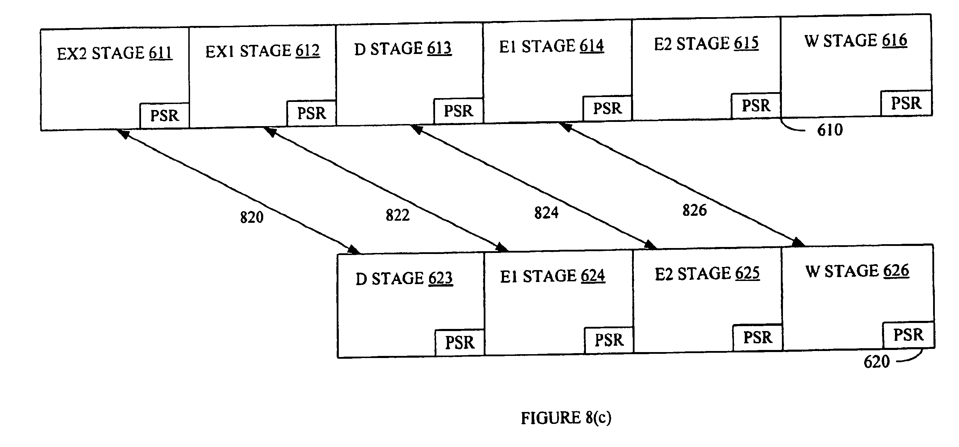

Fig. 8(c) illustrates the correspondence between stages of load store pipeline 620 and variable length integer pipeline 510 when the pipeline skew is equal to two. As indicated by arrow 830, expansion two stage 611 of variable integer pipeline 610 corresponds with decode stage 623 of load store pipeline 620 when the pipeline skew is equal to two. Similarly, arrows 832, 834, and 836 indicates that expansion one stage 612, decode stage 614, and execute one stage 614 of variable length integer pipeline 610 corresponds with execute one stage 624, execute 2 stage 625, and write back stage 626 of load/store pipeline 620, respectively, when the pipeline skew is equal to two. Thus, the pipeline skew parameter can be used to easily identify corresponding stages in different pipelines.

Pipe skew parameters are generated during instruction issuing. Specifically, when an integer instruction is issued to decode stage 613 simultaneously with a load/store instruction (which is always issued to decode stage 623), the pipe skew parameters of both instructions is equal to 0. When an integer instruction is issued to expansion one stage 612 simultaneously with a load/store instruction, the pipe skew parameter of both instructions is equal to 1. When an integer instruction is issued to expansion two stage 611 simultaneously with a load/store instruction, the pipe skew parameter of both instructions is equal to 2. In one embodiment of the present invention, when an integer instruction is single issued (i.e. no load/store instruction is simultaneously issued), a bubble is issued into the load/store pipeline. The bubble is maintained in the load/store pipeline and behaves as a NOP (No operation) instruction. Pipeline skew parameters can be assigned as if the bubble were simultaneously issued load/store instruction. For single issued load/store instruction, the pipeline skew parameter is equal to the greater of zero or the pipeline skew parameter stored in the pipeline skew register of execute one stage 624 minus 1.

The pipeline skew parameters are propagated through the pipeline stages and stored in the pipeline skew registers of each pipeline stage. As the skew between instructions changes the appropriate pipeline skew parameters are modified (as described below). The pipeline skew parameters are used for hazard detections and data forwarding, to facilitate pipeline stalling, and instruction cancellations.

First, the pipeline skew parameters are used to detect data hazards such as read after write (RAW) hazards and write after write (WAW) hazards, and to use data forwarding to resolve the hazards. If data forwarding is not possible, the pipeline needs to be stalled as described below. Instructions typically read source operands from the register file. However, due to pipelining the proper data may not yet be in the register file because data resulting from preceding instructions have not been written into the register file. To detect these read after write (RAW) hazards the source register addresses of the instruction in the decode stage of a pipeline are compared to all destination register addresses of all preceding instructions in later pipeline stages. If a destination register address of a preceding instruction matches the source register address of the instruction in a decode stage, then a RAW hazard is detected. This search mechanism start with the closest preceding instruction and ripples up to the oldest instruction available in the pipelines. The search stops when a match is found or the oldest instruction in the pipeline is reached. This is a linear search through the pipeline for pure in-order execution but for limited out-of-order execution the search order not only depends on the pipeline stage but also on the individual pipeline skew parameters.

Table 1 lists the pipeline stages from highest priority to lowest priority with regards to the address search for hazards. The specific priority of each load/store pipeline stage depends on the pipeline skew parameter in the pipeline stage. Thus, for example, Execute one stage 624 of load/store pipeline 620 appears in table 1 once for each value of the pipeline skew parameter of execute one stage 624. However, in an actual search each load/store pipeline stage appears once in a priority table, but the specific location of each pipeline stage shifts due to the pipeline skew parameters.

**Table 1**

| PIPELINE | Pipeline Stage | PSP |
|---|---|---|
| Integer | Expansion two stage 611 | any |
| Load/Store | Execute one stage 624 | 2 |
| Integer | Expansion one stage 612 | any |
| Load/Store | Execute one stage 624 | 1 |
| Load/Store | Execute two stage 625 | 2 |
| Integer | Decode Stage 613 | any |
| Load/Store | Execute one stage 624 | 0 |
| Load/Store | Execute two stage 625 | 1 |
| Load/Store | Write Back Stage 626 | 2 |
| Integer | Execute One Stage 614 | any |
| Load/Store | Execute two stage 625 | 0 |
| Load/Store | Write Back Stage 626 | 1 |
| Integer | Execute two Stage 615 | any |
| Load/Store | Write Back Stage 626 | 0 |
| Integer | Write Back Stage 616 | any |

In some embodiments of the present invention, the pipeline skew is limited to two pipeline stages. Thus, the maximum pipeline skew parameter is equal to two. For these embodiments, specific pipeline stages would only need to use a portion of the priority table (i.e. Table 1) depending on the pipeline skew parameter of the particular pipeline stage. Specifically, if a read instruction is in decode stage 623 of load/store pipeline 620 the entire priority table is used when the pipeline skew parameter of decode stage 623 is equal to two. However, when the pipeline skew parameter of decode stage 623 is equal to 1 the search can start from the table entry for expansion one stage 612 of variable length integer pipeline 610. Furthermore, when the pipeline skew parameter of decode stage 623 is equal to 0 the search can start from the entry for decode stage 613 of variable length integer pipeline.

When a read instruction is in execute one stage 625 of load/store pipeline 620, the search can begin at the entry for expansion one stage 612, decode stage 613, ore execute one stage 614, when the pipeline skew parameters of execute two stage 625 is equal to 2, 1, and 0, respectively. When a read instruction is in execute two stage 625 of load/store pipeline 620, the search can begin at the entry for decode stage 613, execute one stage 614, or execute stage 615, when the pipeline skew parameters of execute two stage 625 is equal to 2, 1, and 0, respectively. When a read instruction is in write back stage 626 of load/store pipeline 620, the search can begin at the entry for execute one stage 614, execute stage 615, or write back stage 61, when the pipeline skew parameters of write back stage 626 is equal to 2, 1, and 0, respectively. Thus, in general for a load/store instruction, the search for RAW hazards in the integer pipeline includes the corresponding integer pipeline stage and later stages of the integer pipeline. Furthermore, the search for RAW hazards would also include later load/store pipeline stages.

When a read instruction is in decode stage 613 of variable length integer pipeline 610, then the search can start just after the entry for decode stage 613 of variable length integer pipeline 610 when the pipeline skew parameter of decode stage 613 is equal to 0 or 1. However, if the pipeline skew parameter of decode stage 613 is equal to 2, the search can start at the entry for write back stage 626 when the pipeline skew parameter of write back stage 626 is equal to 2 or at the entry for execute one stage 614 when the pipeline skew parameter of write back stage 626 is not equal to 2.

Sometimes an instruction cannot proceed within the pipeline, e.g. due to data dependencies like RAW hazards, or resource contention. Consequently, the instruction stalls. Furthermore, younger instructions (i.e. instructions that follow the stalled instruction within the instruction sequence of the program) within the same pipeline also stall because the first stalled instruction remains in the pipeline stage so other instructions are prevented from entering that pipeline stage. For example, if an instruction in the execute 1 stage must stall, then the execute 1 stage is already occupied and no instruction from the decode stage of the same pipeline can proceed to the execute 1 stage until the instruction in the execute 1 stage can proceed. Due to stalling younger instructions, all instructions are executed in-order. However, for processors having multiple execution pipelines, parallel resources (pipelines) are available so that instructions can be issued out-of-order. Embedded processors, even those with parallel pipelines, mostly avoid out-of-order execution due to the high cost in chip area and development. On the other hand, high-end processors use out-of-order execution. The present invention uses a new technique of limited out-of-order execution to achieve better performance without excessive cost.

Due to variable length integer pipeline 610, pipeline stalls are separated into two classes: precise stalls and imprecise stalls. For a precise stall of an instruction, all younger instructions in all parallel pipelines are also stalled. Conversely, for an imprecise stall of an instruction, younger instructions e.g. in a parallel pipeline can continue.

The pipeline skew parameter provides an easy mechanism to determine which pipeline stages need to be stalled when a pipeline stall does occur. When a precise stall occurs in decode stage 613 of variable length integer pipeline 610, expansion two stage 611 and expansion one stage 612 are also stalled. As explained above and illustrated in Fig. 8(c), when the pipeline skew parameter of decode stage 613 is equal to 2, decode stage 613 corresponds with execute two stage 625. Therefore, the instructions in decode stage 623, execute one stage 624, and execute two stage 625 of load/store pipeline 620 are all younger than the instruction in decode stage 613 of variable length integer pipeline 610. Therefore, the instructions in decode stage 623, execute one stage 624, and execute two stage 625 of load/store pipeline 620 are also stalled when a precise stall occurs in decode stage 613 and the pipeline skew parameter of decode stage 613 is equal to 2. Similarly, when a precise stall occurs in decode stage 613 and the pipeline skew parameter of decode stage 613 is equal to 1, which indicates decode stage 613 corresponds with execute one stage 624, decode stage 623 and execute one stage 624 of load/store pipeline 620 are also stalled. Likewise, when a precise stall occurs in decode stage 613 and the pipeline skew parameter of decode stage 613 is equal to 0, which indicates decode stage 614 corresponds with decode stage 623 of load/store pipeline 620, decode stage 623 of load/store pipeline 620 is also stalled. When an imprecise stall occurs in decode stage 613 of variable length integer pipeline 610, expansion two stage 611 and expansion one stage 612 are also stalled. However, none of the pipeline stages of load/store pipeline 620 are required to be stalled.

In most embodiments of the present invention, integer instructions can only stall in decode stage 613. In other embodiments, a precisely stalled integer instruction stalls the corresponding load/store pipeline stage and preceding load/store pipeline stages. Thus,a stall in execute one stage 614 would cause instructions in decode stage 613, expansion two stage 611, and expansion one stage 612 to also stall. Furthermore, a precise stall in execute one stage 614 when the pipeline skew parameter of execute one stage 614 is equal to 2 would also cause all stages of load/store pipeline 620 to stall. A precise stall in execute one stage 614 when the pipeline skew parameter of execute one stage 614 is equal to 1 would cause execute stage 625, execute stage 624, and decode stage 623 of load/store pipeline 620 to stall. A precise stall in execute one stage 614 when the pipeline skew parameter of execute one stage 614 is equal to 0 would cause execute stage 624, and decode stage 623 of load/store pipeline 620 to stall.

A stall in execute two stage 615 would cause instructions in execute one stage 614, decode stage 613, expansion two stage 611, and expansion one stage 612 to also stall. Furthermore, a precise stall in execute two stage 615 when the pipeline skew parameter of execute two stage 615 is equal to 2 or equal to 1 would also cause all stages of load/store pipeline 620 to stall. A precise stall in execute two stage 615 when the pipeline skew parameter of execute two stage 616 is equal to 0 would cause execute stage 625, execute stage 624, and decode stage 623 of load/store pipeline 620 to stall.

A stall in write back stage 616 would cause instructions in execute two stage 615, execute one stage 614, decode stage 613, expansion two stage 611, and expansion one stage 612 to also stall. Furthermore, a precise stall in write back stage 616 would also cause all stages of load/store pipeline 620 to stall regardless of the pipeline skew parameter of write back stage 616.

When a stall occurs in decode stage 623 of load/store pipeline 620 no other pipeline stages are required to be stalled, because the instruction in load/store decode stage 623 is the youngest instructions of load/store pipeline 620 and instruction pipeline 610 in the embodiment of Figs. 6(a) and 6(b).

In general, a stall is imprecise when the stall causes an expansion stage of the variable length integer pipeline to be filled or emptied. However, stalls can also be imprecise even when the expansion stages are not filled or emptied. Furthermore, expansion stages can be emptied without a pipeline stall.

In the embodiment of Figs. 6(a) and 6(b), the dynamics of the out-of-order execution is limited from a pipeline skew of 0 to 2. In this range, stalls can be imprecise. If all pipeline skew parameters are 0, then the instruction are executed in-order which means the instructions of the load store pipeline are not ahead of the integer pipeline, and vice versa. To prevent negative pipeline skew parameters, a stall in execute one stage 624 of load/store pipeline 620 is considered a precise stall when the pipeline skew parameter of execute one stage 624 or decode stage 623 is equal to zero, while a valid instruction is in the stage. Otherwise stalls in execute one stage 624 are classified as imprecise. As explained above, for a precise stall in execute one stage 624, decode stage 623 is also stalled. Furthermore, when the pipeline skew parameter of execute one stage 624 is equal to 0, decode stage 613, expansion one stage 612, and expansion two stage 611 of variable length integer pipeline 610 are also stalled. When the pipeline skew parameter of execute one stage 624 is equal to 1, expansion one stage 612 and expansion two stage 611 of variable length integer pipeline 610 are also stalled. When the pipeline skew parameter of execute one stage 624 is equal to 2, expansion two stage 611 of variable length integer pipeline 610 is also stalled.

For an imprecise stall in execute one stage 624, decode stage 623 is also stalled but none of the pipeline stages in variable length integer pipeline 610 are required to be stalled due to an imprecise stall in execute one stage 624. If there are no other condition which causes stalls, then variable length integer pipeline 610 continues to execute instructions, which causes the pipeline skews that are greater than zero to be decremented. Thus, pipeline skew parameters are reduced as the expansion stages get emptied, and the instruction execution returns to back in-order execution.

For execute two stage 625 of load/store pipeline 620, a stall is considered a precise stall when the pipeline skew parameters of execute two stage 625, execute one stage 624, or decode stage 623 is equal to zero, while a valid instruction is in the stage. Otherwise stalls in execute two stage 625 are classified as imprecise. For a precise stall in execute two stage 625, execute one stage 624 and decode stage 623 are also stalled. Furthermore, when the pipeline skew parameter of execute two stage 625 is equal to 0, execute one stage 614, decode stage 613, expansion one stage 612, and expansion two stage 611 of variable length integer pipeline 610 are also stalled. When the pipeline skew parameter of execute two stage 625 is equal to 1, decode stage 613, expansion one stage 612, and expansion two stage 611 of variable length integer pipeline 610 are also stalled. When the pipeline skew parameter of execute two stage 625 is equal to 2, expansion one stage 612 and expansion two stage 611 of variable length integer pipeline 610 are also stalled. For an imprecise stall in execute two stage 625, execute one stage 624 and decode stage 623 are also stalled but none of the pipeline stages in variable length integer pipeline 610 are required to be stalled. If there is no other condition which causes stalls, then the variable length integer pipeline 610 continues to execute instructions which leads to decrementing all pipeline skews which are greater than 0. Thus, pipeline skew parameters are reduced, the expansion stages get emptied, and the instruction execution goes back in-order.

In the embodiment of Fig. 6(a) and 6(b), stalls do not occur in execute two stage 615 or write back stage 616 of variable length integer pipeline 610 because there are no stall sources in these stages and no other situation that causes these stages to stall. Similarly, stalls do not occur in write back stage 626 of load/store pipeline 620. However, in other embodiments of the present invention, stalls in the write-back stage are allowed. For write-back stage 626 of load/store pipeline 620, a stall is considered a precise stall when the pipeline skew parameters of write-back-stage 626, execute two stage 625, execute one stage 624, or decode stage 623 is equal to zero, while a valid instruction is in the stage. Otherwise stalls in write-back stage 626 are classified as imprecise. For a precise stall in write-back stage 626, execute two stage 625, execute one stage 624 and decode stage 623 are also stalled. Furthermore, when the pipeline skew parameter of write-back stage 626 is equal to 0, execute two stage 615, execute one stage 614, decode stage 613, expansion one stage 612, and expansion two stage 611 of variable length integer pipeline 610 are also stalled. When the pipeline skew parameter of write-back stage 626 is equal to 1, execute one stage 614, decode stage 613, expansion one stage 612, and expansion two stage 611 of variable length integer pipeline 610 are also stalled. When the pipeline skew parameter of write-back stage 626 is equal to 2, decode stage 613, expansion one stage 612 and expansion two stage 611 of variable length integer pipeline 610 are also stalled. Thus, in general a precisely stalled load/store instruction stalls the integer pipeline stages that precede the corresponding integer pipeline stage.

For an imprecise stall, execute two stage 625, execute one stage 624 and decode stage 623 are also stalled but none of the pipeline stages in variable length integer pipeline 610 are required to be stalled. If there is no other condition which causes stalls, then the variable length integer pipeline 610 continues to execute instructions which leads to decrementing all pipeline skews which are greater than 0. Thus, the pipeline skew parameters are reduced, the expansion stages get emptied, and the instruction execution goes back to in-order execution.

The pipeline skew parameter can also be used during instruction cancellations. An instruction may need to be cancelled for a variety of reasons. For example, during speculative execution, instructions are placed in the pipelines before actually determining which branch of a conditional should be executed. If the selected branch is incorrect, the instructions must be cancelled. Other causes of instruction cancellation includes error handling, trap handling, and interrupts. When an instruction is cancelled, all younger instructions should also be cancelled.

As explained above, the pipeline skew parameter is used to track the relative position of a load/store instruction and an integer instruction that were simultaneously issued to the load/store pipeline and the variable length integer pipeline, respectively. For clarity, in the embodiments described herein, an integer instruction that is simultaneously issued with load store instruction is precedes the load/store instruction in the instruction sequence of the program.

When an integer instruction in a particular stage (for clarity, the initial instruction to be cancelled is said to be in the initial cancelled stage) is cancelled, all integer instructions in preceding stages are also cancelled. Furthermore, the load/store instructions in the load/store stage that corresponds to the initial cancelled stage and all preceding load/store pipeline stages are cancelled. Therefore, when the initial cancelled stage is expansion two stage 611, the integer instruction in expansion two stage 611 is cancelled. Furthermore, if the pipeline skew parameter of expansion two stage 611 is equal to two, the load/store instruction in decode stage 623 of load store pipeline 620 is also cancelled.

When the initial cancelled stage is expansion one stage 612, the integer instructions in expansion two stage 611 and expansion one stage 612 are cancelled. Furthermore, if the pipeline skew parameter of expansion one stage 612 is equal to one, the load/store instruction in decode stage 623 of load store pipeline 620 is also cancelled. However, if the pipeline skew parameter of expansion one stage 612 is equal to two, the load/store instructions in decode stage 623 and execute one stage 624 of load store pipeline 620 are also cancelled.

When the initial cancelled stage is decode stage 613, the integer instructions in expansion two stage 611, expansion one stage 612, and decode stage 613 are cancelled. Furthermore, if the pipeline skew parameter of decode stage 613 is equal to zero, the load/store instruction in decode stage 623 of load store pipeline 620 is also cancelled. If the pipeline skew parameter of decode stage 613 is equal to one, the load/store instructions in decode stage 623 and execute one stage 624 of load store pipeline 620 are also cancelled. If the pipeline skew parameter of decode stage 613 is equal to two, the load/store instructions in decode stage 623, execute one stage 624, and execute two stage 625 of load store pipeline 620 are also cancelled.

When the initial cancelled stage is execute one stage 614, the integer instructions in expansion two stage 611, expansion one stage 612, decode stage 613, and execute one stage 614 are cancelled. Furthermore, if the pipeline skew parameter of execute one stage 615 is equal to zero, the load/store instructions in decode stage 623 and execute one stage 624 of load store pipeline 620 are also cancelled. If the pipeline skew parameter of execute one stage 614 is equal to one, the load/store instructions in decode stage 623, execute one stage 624, and execute two stage 625 of load store pipeline 620 are also cancelled. If the pipeline skew parameter of execute one stage 614 is equal to two, the load/store instructions in decode stage 623, execute one stage 624, execute two stage 625, and write back stage 626 of load store pipeline 620 are also cancelled. However, in most embodiments of the present invention, instructions in write back stages (e.g., write back stage 616 and write back stage 626) are never cancelled.

Most embodiments of the present invention do not allow cancellation of instructions execute two stage 615. In embodiments that do allow cancellation of instructions in execute two stage 615, when the initial cancelled stage is execute one stage 614, the integer instructions in expansion two stage 611, expansion one stage 612, decode stage 613, execute one stage 614, and execute two stage 615 are cancelled. Furthermore, if the pipeline skew parameter of execute one stage 615 is equal to zero, the load/store instructions in decode stage 623, execute one stage 624, and execute two stage 625 of load store pipeline 620 are also cancelled. If the pipeline skew parameter of execute two stage 615 is equal to one, the load/store instructions in decode stage 623, execute one stage 624, execute two stage 625, and write back stage 626 of load store pipeline 620 are also cancelled. However, in most embodiments of the present invention, instructions in write back stages are never cancelled.

As stated above most embodiments of the present invention do not allow cancellation of instruction in write back stages. For those embodiments that would allow the initial cancelled stage to be write back stage 616, all instructions in both variable length integer pipeline 610 and load/store pipeline 620 are cancelled.

When a load/store instruction in the initial canceled stage is cancelled, all load/store instructions in preceding stages are also cancelled. Furthermore, all integer instructions in stages preceding the integer stage that corresponds with the initial cancelled stage are cancelled. The integer instruction in the integer stage corresponding to the initial cancelled (load/store) stage does not need to be cancelled because as WO 2006/122941 explained above, in the embodiments described herein an integer instruction precedes a simultaneously issued load/store instruction.

When the initial cancelled stage is decode stage 623 of load/store pipeline 620, the load/store instruction in decode stage 623 is cancelled. Furthermore, if the pipeline skew parameter of decode stage 623 is equal to zero, the integer instructions in expansion two stage 611 and expansion one stage 612 of integer pipeline 610 are also cancelled. If the pipeline skew parameter of decode stage 623 is equal to one, the integer instruction in expansion two stage 611 of integer pipeline 610 is also cancelled.

When the initial cancelled stage is execute one stage 624 of load/store pipeline 620, the load/store instruction in decode stage 623 and execute one stage 624 are cancelled. Furthermore, if the pipeline skew parameter of execute one stage 624 is equal to zero, the integer instructions in expansion two stage 611, expansion one stage 612, and decode stage 613 of integer pipeline 610 are also cancelled. If the pipeline skew parameter of execute one stage 624 is equal to one, the integer instructions in expansion two stage 611 and expansion one stage 612 of integer pipeline 610 are also cancelled. If the pipeline skew parameter of execute one stage 624 is equal to two, the integer instruction in expansion two stage 611 of integer pipeline 610 is also cancelled.

When the initial cancelled stage is execute two stage 625 of load/store pipeline 620, the load/store instruction in decode stage 623, execute one stage 624, and execute two stage 625 are cancelled. Furthermore, if the pipeline skew parameter of execute two stage 625 is equal to zero, the integer instructions in expansion two stage 611, expansion one stage 612, decode stage 613, and execute one stage 614 of integer pipeline 610 are also cancelled. If the pipeline skew parameter of execute two stage 625 is equal to one, the integer instructions in expansion two stage 611, expansion one stage 612, and decode stage 613 of integer pipeline 610 are also cancelled. If the pipeline skew parameter of execute two stage 625 is equal to two, the integer instructions in expansion two stage 611 and expansion one stage 612 of integer pipeline 610 are also cancelled.

As stated above most embodiments of the present invention do not allow cancellation of instruction in write back stages. For those embodiments that would allow the initial cancelled stage to be write back stage 626 of load/store pipeline 620, the load/store instruction in decode stage 623, execute one stage 624, execute two stage 625, and write back stage 626 are cancelled. Furthermore, if the pipeline skew parameter of write back stage 626 is equal to zero, the integer instructions in expansion two stage 611, expansion one stage 612, decode stage 613, execute one stage 614, and execute two stage 615 of integer pipeline 610 are also cancelled. If the pipeline skew parameter of write back stage 626 is equal to one, the integer instructions in expansion two stage 611, expansion one stage 612, decode stage 613, and execute one stage 614 of integer pipeline 610 are also cancelled. If the pipeline skew parameter of write back stage 626 is equal to two, the integer instructions in expansion two stage 611, expansion one stage 612, and decode stage 613 of integer pipeline 610 are also cancelled.

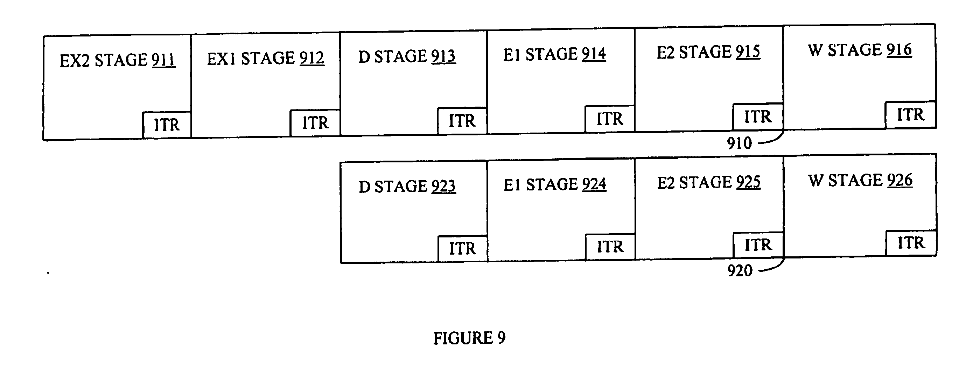

Fig. 9 is a simplified diagram of an embodiment of the present invention that uses issues tags (ITAGs) to quickly calculate pipeline skew parameters. Fig. 9 includes a variable length integer pipeline 910 and a load/store pipeline 920. Variable length integer pipeline 910 includes an expansion two stage 911, an expansion one stage 912, a decode stage 913, execute one stage 914, execute two stage 915, and a write back stage 916. Variable length integer pipeline 910 is very similar to variable integer pipeline 610 (Fig. 6(a)), however each pipeline stage of variable length integer pipeline 910 includes an issue tag register (ITR) rather than a pipeline skew register (PSR). Similarly, load/store pipeline 920, which includes a decode stage 923, an execute one stage 924, an execute two stage 925, and a write back stage 926, is very similar to load/store pipeline 620; however, each stage of load/store pipeline 920 includes an issue tag register (ITR) rather than a pipeline skew register (PSR). Issue tags are used to dynamically calculate pipeline skew parameters, thus the pipeline skew parameters need not be stored in each pipeline stage. However, some embodiments of the present invention may include both issue tag registers and pipeline skew registers.

In the embodiment of Fig. 9, every issue group is assigned a unique issue tag with respect to the issue groups still within variable length integer pipeline 910 and load/store pipeline 920. Each instruction in the issue group carries the issue tag through the pipeline in the issue tag register of each pipeline stage. Because there can be at most six issue groups in variable length integer pipeline 910 and load/store pipeline 920, issue tags can be encoded using only three bits. Thus, in one embodiment of the present invention, issue tags are issued sequentially starting with one up to seven and restarting at one again. An issue tag of zero is reserved for issue bubbles as described below.

Issue tags are created based on a few simple rules. First, every integer instruction issued into variable length integer pipeline 910 receives a new issue tag. A load/store instruction issued to load/store pipeline 920 that is dual issued with an integer instruction receives the same issue tag as the integer instruction. An incompressible load/store bubble that is injected into load/store pipeline 920 at the same time as a single issued integer instruction is issued into variable length integer pipeline 910 receives the same issue tag as the integer instruction. Single issued load/store instruction receives the same issue tag that is stored in execute one stage 924 of load/store pipeline 920. Issue stages of variable length integer pipeline 910 that are not issued an integer instruction and do not already contain an integer instruction receive an issue tag of zero. The issue stages of variable length integer pipeline 910 are expansion one stage 911, expansion two stage 912, and decode stage 913. Thus, for example when an instruction is issued to expansion one stage 912, a new issue tag is generated for expansion one stage 912 and the issue tags of expansion two stage 911 is set to the reserved value (i.e. zero) unless a valid integer instruction is in expansion two stage 911. Similarly, the issue tag of decode stage 913 would be set to the reserved value (i.e., zero) unless a valid integer instruction is in decode stage 913.

Stalling of a pipeline stage (i.e. the stalled stage) while the next stage continues causes a bubble in the next stage (i.e. the bubble stage). For example if execute one stage 914 stalls but the instruction in execute two stage 915 continues on to write back stage 916, a bubble in execute two stage 915 is formed. When a bubble forms the bubble stage is assigned the same issue tag as the stalled stage. In the example above, execute two stage 915 would be assigned the same issue tag as execute one stage 914. Cancellation of instructions does not effect the issue tags of the pipeline stages.

Calculation of pipeline skew parameters from issue tags is performed for each pipeline stage using simple comparisons. Specifically, for decode stage 923 of load/store pipeline 920, the pipeline skew parameter is equal to two if the issue tag of decode stage 923 of load/store pipeline 920 is equal to the issue tag of expansion two stage 911 of variable length integer pipeline 910. Alternatively, the pipeline skew parameter of decode stage 923 is equal to one if the issue tag of decode stage 923 of load/store pipeline 920 is equal to the issue tag of expansion one stage 912 of variable length integer pipeline 910. Otherwise the pipeline skew parameter of decode stage 923 of load/store pipeline 920 is equal to zero.

For execute one stage 924 of load/store pipeline 920, the pipeline skew parameter is equal to two if the issue tag of execute one stage 924 of load/store pipeline 920 is equal to the issue tag of expansion one stage 912 of variable length integer pipeline 910. Alternatively, the pipeline skew parameter of execute one stage 924 is equal to one if the issue tag of execute one stage 924 of load/store pipeline 920 is equal to the issue tag of decode stage 913 of variable length integer pipeline 910. Otherwise the pipeline skew parameter of execute one stage 924 of load/store pipeline 920 is equal to zero.

For execute two stage 925 of load/store pipeline 920, the pipeline skew parameter is equal to two if the issue tag of execute two stage 925 of load/store pipeline 920 is equal to the issue tag of decode stage 913 of variable length integer pipeline 910. Alternatively, the pipeline skew parameter of execute two stage 925 is equal to one if the issue tag of execute two stage 925 of load/store pipeline 920 is equal to the issue tag of execute one stage 914 of variable length integer pipeline 910. Otherwise the pipeline skew parameter of execute two stage 925 of load/store pipeline 920 is equal to zero.

The pipeline skew parameter after execute two stage 925 of load/store pipeline 920 does not change. Therefore, the pipeline skew parameter for write back stage 926 of load/store pipeline 920 is copied from execute two stage 925 of load/store pipeline 920 as the instruction from execute two stage 925 of load/store pipeline 920 proceeds to write back stage 926 of load/store pipeline 920.

For expansion two stage 911 of variable length integer pipeline 910, the pipeline skew parameter is equal to two if the issue tag of expansion two stage 911 of variable length integer pipeline 910 is equal to the issue tag of decode stage 923 of load store pipeline 920. Otherwise the pipeline skew parameter of expansion two stage 911 of variable length integer pipeline 910 is equal to zero.

For expansion one stage 912 of variable length integer pipeline 910, the pipeline skew parameter is equal to two if the issue tag of expansion one stage 912 of variable length integer pipeline 910 is equal to the issue tag of execute one stage 924 of load/store pipeline 920. Alternatively, the pipeline skew parameter of expansion one stage 912 is equal to one if the issue tag of expansion one stage 912 of variable length integer pipeline 910 is equal to the issue tag of decode stage 923 of load/store pipeline 920. Otherwise the pipeline skew parameter of expansion one stage 912 of variable length integer pipeline 910 is equal to zero.

For decode stage 913 of variable length integer pipeline 910, the pipeline skew parameter is equal to two if the issue tag of decode stage 913 of variable length integer pipeline 910 is equal to the issue tag of execute two stage 925 of load/store pipeline 920. Alternatively, the pipeline skew parameter of decode stage 913 is equal to one if the issue tag of decode stage 913 of variable length integer pipeline 910 is equal to the issue tag of execute one stage 924 of load/store pipeline 920. Otherwise the pipeline skew parameter of decode stage 913 of variable length integer pipeline 910 is equal to zero.

For execute one stage 914 of variable length integer pipeline 910, the pipeline skew parameter is equal to two if the issue tag of execute one stage 914 of variable length integer pipeline 910 is equal to the issue tag of write back stage 926 of load/store pipeline 920. Alternatively, the pipeline skew parameter of execute one stage 914 is equal to one if the issue tag of execute one stage 914 of variable length integer pipeline 910 is equal to the issue tag of execute two stage 925 of load/store pipeline 920. Otherwise the pipeline skew parameter of execute one stage 914 of variable length integer pipeline 910 is equal to zero.

The pipeline skew parameter after execute one stage 914 of variable length integer pipeline 910 do not change. Therefore, the pipeline skew parameter for execute two stage 915 of variable length integer pipeline 910 is copied from execute one stage 914 of variable length integer pipeline 910 as the instruction from execute one stage 914 proceeds to execute two stage 915. Similarly, write back stage 916 of variable length integer pipeline 910 is copied from execute two stage 915 of variable integer length pipeline 920 as the instruction from execute two stage 915 of variable length integer pipeline 910 proceeds to write back stage 916 of variable length integer pipeline 910.

In the various embodiments of this invention, novel structures and methods have been described to minimize pipeline stalls and data hazards by executing instructions limited out-of-order while allowing precise cancellation of instructions in case of interrupts and other events. Using a variable length integer pipeline having pipeline skew registers with a load/store pipeline also having pipeline skew registers in accordance with an embodiment of the present invention facilitates handling of pipeline stalls, data hazards, data forwarding and instruction cancellation. Furthermore by include issue tags in the pipelines, the pipeline skew parameters can be calculated very efficiently. The various embodiments of the structures and methods of this invention that are described above are illustrative only of the principles of this invention and are not intended to limit the scope of the invention to the particular embodiments described. For example, in view of this disclosure, those skilled in the art can define other instruction fetch stages, pre-decode stages, decode stages, execute stages, expansion stages, write back stages, forwarding paths, instruction pipelines, load/store pipelines, integer pipelines, instructions, issue tags, pipeline skew parameters, and so forth, and use these alternative features to create a method or system according to the principles of this invention. Thus, the invention is limited only by the following claims.

## Claims

1. A method of operating a processor adapted to track the skew between two pipelines having a first-type pipeline (610; 910) having a plurality of first-type pipeline stages (611 - 616; 911 - 916) and a second-type pipeline (620; 920) having a plurality of second-type pipeline stages (623 - 626; 923 - 926), the method comprising:
simultaneously issuing a first first-type instruction into a first first-type pipeline stage and a first second-type instruction into a first second-type pipeline stage;
**characterized in that** the method further comprises:
generating a first first-type skew parameter for the first first-type instruction;
storing the first first-type skew parameter in the first first-type pipeline stage;
propagating the first first-type skew parameter through the first-type pipeline with the first first-type instruction;
generating a first second-type skew parameter for the first second-type instruction;
storing the first second-type skew parameter in the first second-type pipeline stage; and
propagating the first second-type skew parameter through the second-type pipeline with the first second-type instruction.

2. The method of Claim 1, wherein the first first-type skew parameter equals the first second-type skew parameter.

3. The method of Claim 1, wherein:
the first first-type skew parameter is equal to zero when the first first-type stage is a first-type decode stage (613; 913) and the first second-type stage is a second-type decode stage (623; 923);
the first first-type skew parameter is equal to one when the first first-type stage is a first first-type expansion stage (612; 912) and the first second-type stage is the second-type decode stage (623; 923); and
the first first-type skew parameter is equal to two when the first first-type stage is a second first-type expansion stage (611; 911) preceding the first first-type expansion stage (612; 912) and the first second-type stage is the second-type decode stage (623; 923).

4. The method of Claim 1, further comprising:
incrementing the first first-type skew parameter when the first second-type instructions propagates down the second-type pipeline (620; 920) and the first first-type instruction is stalled in the first-type pipeline (610; 910); and
decrementing the first first-type skew parameter when the first first-type instruction propagates down the first-type pipeline (610; 910) and the first second-type instruction is stalled in the second-type pipeline (620; 920).

5. The method of Claim 1, wherein the first first-type skew parameter indicates a relative position of the first second-type instruction and the first first-type instruction.

6. The method of Claim 1, further comprising detecting data hazard for the first second-type instruction using the second-type skew parameter.

7. The method of Claim 6, wherein the first second-type skew parameter identifies a corresponding first-type pipeline stage for the first second-type instruction and further comprising comparing destination register addresses in the corresponding first-type pipeline stage and later first-type pipeline stage to a source register address of the first second-type pipeline stage.

8. The method of Claim 1, further comprising stalling second-type pipeline stages in response to a stalled first-type instruction in a second first-type pipeline stage having a second first-type skew parameter.

9. The method of Claim 8, wherein the second first-type skew parameter identifies a corresponding second-type pipeline stage for the stalled first-type instruction and further comprising stalling the corresponding second-type pipeline stage and preceding second-type pipeline stages.

10. The method of Claim 1, further comprising stalling first-type pipeline stages in response to a stalled second-type instruction in a second second-type pipeline stage having a second second-type skew parameter.

11. The method of Claim 10, wherein the second second-type skew parameter identifies a corresponding first-type pipeline stage for the stalled second-type instruction and further comprising stalling the first-type pipeline stages preceding the corresponding first-type pipeline stage.

12. The method of Claim 1, further comprising canceling second-type instructions in response to a cancelled first-type instruction in an initial cancelled stage having a second first-type skew parameter.

13. The method of Claim 12, wherein the second first-type skew parameter identifies a corresponding second-type pipeline stage for the initial cancelled stage and further comprising canceling second-type instructions in the corresponding second-type pipeline stage and preceding second-type pipeline stages.

14. The method of Claim 1, further comprising canceling first-type pipeline instructions in response to a cancelled second-type instruction in an initial cancelled stage having a second second-type skew parameter.

15. The method of Claim 14, wherein the second second-type skew parameter identifies a corresponding first-type pipeline stage for the initial cancelled stage and further comprising canceling first-type instructions in first-type pipeline stages preceding the corresponding first-type pipeline stage.

16. The method of Claim 1, wherein the first-type pipeline (610; 910) is an integer pipeline and the second-type pipeline (620; 920) is a load/store pipeline.

17. The method of Claim 1, wherein the first-type pipeline (610; 910) is a first integer pipeline and the second-type pipeline (620; 920) is a second integer pipeline.

18. The method of Claim 1, wherein the first-type pipeline (610; 910) is a first load/store pipeline and the second-type pipeline (620; 920) is a second load/store pipeline.

19. A processor adapted to track the skew between two pipelines comprising
a first-type pipeline (610; 910) having a plurality of first-type pipeline stages (611 - 616; 911 - 916);
a second-type pipeline (620; 920) having a plurality of second-type pipeline stages (623 - 626; 923 - 926);
means for simultaneously issuing a first first-type instruction into a first first-type pipeline stage and a first second-type instruction into a first second-type pipeline stage;
**characterized in that** the processor further comprises:
means for generating a first first-type skew parameter for the first first-type instruction;
means for storing the first first-type skew parameter in the first first-type pipeline stage;
means for propagating the first first-type skew parameter through the first-type pipeline with the first first-type instruction;
means for generating a first second-type skew parameter for the first second-type instruction
means for storing the first second-type skew parameter in the first second-type pipeline stage; and
means for propagating the first second-type skew parameter through the second-type pipeline with the first second-type instruction.

20. The processor of Claim 19, wherein:
the first first-type skew parameter is equal to zero when the first first-type stage is a first-type decode stage (613: 913) and the first second-type stage is a second-type decode stage (623; 923);
the first first-type skew parameter is equal to one when the first first-type stage is a first first-type expansion stage (612; 912) and the first second-type stage is the second-type decode stage (623; 923); and
the first first-type skew parameter is equal to two when the first first-type stage is a second first-type expansion stage (611; 911) preceding the first first-type expansion stage (612; 912) and the first second-type stage is the second-type decode stage (623; 923).

21. The processor of Claim 19, further comprising:
means for incrementing the first first-type skew parameter when the first second-type instructions propagates down the second-type pipeline (620; 920) and the first first-type instruction is stalled in the first-type pipeline (610; 910); and
means for decrementing the first first-type skew parameter when the first first-type instruction propagates down the first-type pipeline (610; 910) and the first second-type instruction is stalled in the second-type pipeline (620; 920).

22. The processor of Claim 19, wherein the first first-type skew parameter indicates a relative position of the first second-type instruction and the first first-type instruction.

23. The processor of Claim 19, further comprising means for detecting data hazard for the first second-type instruction using the second-type skew parameter.

24. The processor of Claim 19, wherein the first second-type skew parameter identifies a corresponding first-type pipeline stage for the first second-type instruction and further comprising means for comparing destination register addresses in the corresponding first-type pipeline stage and later first-type pipeline stage to a source register address of the first second-type pipeline stage.

25. The processor of Claim 19, further comprising means for stalling second-type pipeline stages in response to a stalled first-type instruction in a second first-type pipeline stage having a second first-type skew parameter.

26. The processor of Claim 25, wherein the second first-type skew parameter identifies a corresponding second-type pipeline stage for the stalled first-type instruction and further comprising means for stalling the corresponding second-type pipeline stage and preceding second-type pipeline stages.

27. The processor of Claim 19, further comprising means for stalling first-type pipeline stages in response to a stalled second-type instruction in a second second-type pipeline stage having a second second-type skew parameter.

28. The processor of Claim 27, wherein the second second-type skew parameter identifies a corresponding first-type pipeline stage for the stalled second-type instruction and further means for comprising stalling the first-type pipeline stages preceding the corresponding first-type pipeline stage.

29. The processor of Claim 19, further comprising means for canceling second-type instructions in response to a cancelled first-type instruction in an initial cancelled stage having a second first-type skew parameter.

30. The processor of Claim 29, wherein the second first-type skew parameter identifies a corresponding second-type pipeline stage for the initial cancelled stage and further comprising means for canceling second-type instructions in the corresponding second-type pipeline stage and preceding second-type pipeline stages.

31. The processor of Claim 19, further comprising means for canceling first-type pipeline instructions in response to a cancelled second-type instruction in an initial cancelled stage having a second second-type skew parameter.

32. The processor of Claim 31, wherein the second second-type skew parameter identifies a corresponding first-type pipeline stage for the initial cancelled stage and further comprising means for canceling first-type instructions in first-type pipeline stages preceding the corresponding first-type pipeline stage.

33. The processor of Claim 19, wherein the first-type pipeline (610; 910) is an integer pipeline and the second-type pipeline (620; 920) is a load/store pipeline.

34. The processor of Claim 19, wherein the first-type pipeline (610; 910) is a first integer pipeline and the second-type pipeline (620; 920) is a second integer pipeline.

35. The processor of Claim 19, wherein the first-type pipeline (610; 910) is a first load/store pipeline and the second-type pipeline (620; 920) is a second load/store pipeline.

## Patentansprüche

1. Zum Verfolgen des Versatzes zwischen zwei Pipelines ausgelegtes Verfahren zum Betrieb eines Prozessors mit einer Pipeline (610; 910) eines ersten Typs mit mehreren Pipeline-Stufen (611-616; 911-916) des ersten Typs und einer Pipeline (620; 920) eines zweiten Typs mit mehreren Pipeline-Stufen (623-626; 923-926) des zweiten Typs, wobei das Verfahren die folgenden Schritte umfasst:
gleichzeitiges Ausgeben einer ersten Anweisung des ersten Typs in eine erste Pipeline-Stufe des ersten Typs und einer ersten Anweisung des zweiten Typs in eine erste Pipeline-Stufe des zweiten Typs;
**dadurch gekennzeichnet, dass** das Verfahren ferner Folgendes umfasst:
Erzeugen eines ersten Versatzparameters des ersten Typs für die erste Anweisung des ersten Typs;
Speichern des ersten Versatzparameters des ersten Typs in der ersten Pipeline-Stufe des ersten Typs;
Propagieren des ersten Versatzparameters des ersten Typs durch die Pipeline des ersten Typs mit der ersten Anweisung des ersten Typs;
Erzeugen eines ersten Versatzparameters des zweiten Typs für die erste Anweisung des zweiten Typs;
Speichern des ersten Versatzparameters des zweiten Typs in der ersten Pipeline-Stufe des zweiten Typs; und
Propagieren des ersten Versatzparameters des zweiten Typs durch die Pipeline des zweiten Typs mit der ersten Anweisung des zweiten Typs.

2. Verfahren nach Anspruch 1, wobei der erste Versatzparameter des ersten Typs gleich dem ersten Versatzparameter des zweiten Typs ist.

3. Verfahren nach Anspruch 1, wobei
der erste Versatzparameter des ersten Typs gleich null ist, wenn die erste Stufe des ersten Typs eine Dekodierstufe (613; 913) des ersten Typs ist und die erste Stufe des zweiten Typs eine Dekodierstufe (623; 923) des zweiten Typs ist;
der erste Versatzparameter des ersten Typs gleich eins ist, wenn die erste Stufe des ersten Typs eine erste Expansionsstufe (612; 912) des ersten Typs ist und die erste Stufe des zweiten Typs die Dekodierstufe (623; 923) des zweiten Typs ist; und
der erste Versatzparameter des ersten Typs gleich zwei ist, wenn die erste Stufe des ersten Typs eine zweite Expansionsstufe (611; 911) des ersten Typs ist, die der ersten Expansionsstufe (612; 912) des ersten Typs vorausgeht, und die erste Stufe des zweiten Typs die Dekodierstufe (623; 923) des zweiten Typs ist.

4. Verfahren nach Anspruch 1, ferner mit den folgenden Schritten:
Inkrementieren des ersten Versatzparameters des ersten Typs, wenn die erste Anweisung des zweiten Typs die Pipeline (620; 920) des zweiten Typs herunterpropagiert und die erste Anweisung des ersten Typs in der Pipeline (610; 910) des ersten Typs festgefahren ist; und
Dekrementieren des ersten Versatzparameters des ersten Typs, wenn die erste Anweisung des ersten Typs die Pipeline (610; 910) des ersten Typs herunterpropagiert und die erste Anweisung des zweiten Typs in der Pipeline (620; 920) des zweiten Typs festgefahren ist.

5. Verfahren nach Anspruch 1, wobei der erste Versatzparameter des ersten Typs eine relative Position der ersten Anweisung des zweiten Typs und der ersten Anweisung des ersten Typs angibt.

6. Verfahren nach Anspruch 1, ferner mit dem Schritt des Detektierens von Datengefahr für die erste Anweisung des zweiten Typs unter Verwendung des Versatzparameters des zweiten Typs.

7. Verfahren nach Anspruch 6, wobei der erste Versatzparameter des zweiten Typs eine entsprechende Pipeline-Stufe des ersten Typs für die erste Anweisung des zweiten Typs identifiziert, und ferner mit dem Schritt des Vergleichens von Zielregisteradressen in der entsprechenden Pipeline-Stufe des ersten Typs und späteren Pipeline-Stufe des ersten Typs mit einer Quellenregisteradresse der ersten Pipeline-Stufe des zweiten Typs.

8. Verfahren nach Anspruch 1, ferner mit dem Schritt des Festfahrens von Pipeline-Stufen des zweiten Typs als Reaktion darauf, dass eine festgefahrene Anweisung des ersten Typs in einer zweiten Pipeline-Stufe des ersten Typs einen zweiten Versatzparameter des ersten Typs aufweist.

9. Verfahren nach Anspruch 8, wobei der zweite Versatzparameter des ersten Typs eine entsprechende Pipeline-Stufe des zweiten Typs für die festgefahrene Anweisung des ersten Typs identifiziert, und ferner mit dem Schritt des Festfahrens der entsprechenden Pipeline-Stufe des zweiten Typs und vorausgehender Pipeline-Stufen des zweiten Typs.

10. Verfahren nach Anspruch 1, ferner mit dem Schritt des Festfahrens von Pipeline-Stufen des ersten Typs als Reaktion darauf, dass eine festgefahrene Anweisung des zweiten Typs in einer zweiten Pipeline-Stufe des zweiten Typs einen zweiten Versatzparameter des zweiten Typs aufweist.

11. Verfahren nach Anspruch 10, wobei der zweite Versatzparameter des zweiten Typs eine entsprechende Pipeline-Stufe des ersten Typs für die festgefahrene Anweisung des zweiten Typs identifiziert, und ferner mit dem Schritt des Festfahrens der der entsprechenden Pipeline-Stufe des ersten Typs vorausgehenden Pipeline-Stufen des ersten Typs.

12. Verfahren nach Anspruch 1, ferner mit dem Schritt des Streichens von Anweisungen des zweiten Typs als Reaktion darauf, dass eine gestrichene Anweisung des ersten Typs in einer anfänglichen gestrichenen Stufe einen zweiten Versatzparameter des ersten Typs aufweist.

13. Verfahren nach Anspruch 12, wobei der zweite Versatzparameter des ersten Typs eine entsprechende Pipeline-Stufe des zweiten Typs für die anfängliche gestrichene Stufe identifiziert, und ferner mit dem Schritt des Streichens von Anweisungen des zweiten Typs in der entsprechenden Pipeline-Stufe des zweiten Typs und vorausgehenden Pipeline-Stufen des zweiten Typs.

14. Verfahren nach Anspruch 1, ferner mit dem Schritt des Streichens von Pipeline-Anweisungen des ersten Typs als Reaktion darauf, dass eine gestrichene Anweisung des zweiten Typs in einer anfänglichen gestrichenen Stufe einen zweiten Versatzparameter des zweiten Typs aufweist.

15. Verfahren nach Anspruch 14, wobei der zweite Versatzparameter des zweiten Typs eine entsprechende Pipeline-Stufe des ersten Typs für die anfängliche gestrichene Stufe identifiziert, und ferner mit dem Schritt des Streichens von Anweisungen des ersten Typs in Pipeline-Stufen des ersten Typs, die der entsprechenden Pipeline-Stufe des ersten Typs vorausgehen.

16. Verfahren nach Anspruch 1, wobei die Pipeline (610; 910) des ersten Typs eine integer-Pipeline ist und die Pipeline (620; 920) des zweiten Typs eine load/store-Pipeline ist.

17. Verfahren nach Anspruch 1, wobei die Pipeline (610; 910) des ersten Typs eine erste integer-Pipeline ist und die Pipeline (620; 920) des zweiten Typs eine zweite integer-Pipeline ist.

18. Verfahren nach Anspruch 1, wobei die Pipeline (610; 910) des ersten Typs eine erste load/store-Pipeline ist und die Pipeline (620; 920) des zweiten Typs eine zweite load/store-Pipeline ist.

19. Prozessor, der dafür ausgelegt ist, den Versatz zwischen zwei Pipelines zu verfolgen, umfassend:
eine Pipeline (610; 910) eines ersten Typs mit mehreren Pipeline-Stufen (611-616; 911-916) des ersten Typs;
eine Pipeline (620; 920) eines zweiten Typs mit mehreren Pipeline-Stufen (623-626; 923-926) des zweiten Typs;
Mittel zum gleichzeitigen Ausgeben einer ersten Anweisung des ersten Typs in eine erste Pipeline-Stufe des ersten Typs und einer ersten Anweisung des zweiten Typs in eine erste Pipeline-Stufe des zweiten Typs;
**dadurch gekennzeichnet, dass** der Prozessor Folgendes umfasst:
Mittel zum Erzeugen eines ersten Versatzparameters des ersten Typs für die erste Anweisung des ersten Typs;
Mittel zum Speichern des ersten Versatzparameters des ersten Typs in der ersten Pipeline-Stufe des ersten Typs;
Mittel zum Propagieren des ersten Versatzparameters des ersten Typs durch die Pipeline des ersten Typs mit der ersten Anweisung des ersten Typs;
Mittel zum Erzeugen eines ersten Versatzparameters des zweiten Typs für die erste Anweisung des zweiten Typs;
Mittel zum Speichern des ersten Versatzparameters des zweiten Typs in der ersten Pipeline-Stufe des zweiten Typs; und
Mittel zum Propagieren des ersten Versatzparameters des zweiten Typs durch die Pipeline des zweiten Typs mit der ersten Anweisung des zweiten Typs.

20. Prozessor nach Anspruch 19, wobei
der erste Versatzparameter des ersten Typs gleich null ist, wenn die erste Stufe des ersten Typs eine Dekodierstufe (613; 913) des ersten Typs ist und die erste Stufe des zweiten Typs eine Dekodierstufe (623; 923) des zweiten Typs ist;
der erste Versatzparameter des ersten Typs gleich eins ist, wenn die erste Stufe des ersten Typs eine erste Expansionsstufe (612; 912) des ersten Typs ist und die erste Stufe des zweiten Typs die Dekodierstufe (623; 923) des zweiten Typs ist; und
der erste Versatzparameter des ersten Typs gleich zwei ist, wenn die erste Stufe des ersten Typs eine zweite Expansionsstufe (611; 911) des ersten Typs ist, die der ersten Expansionsstufe (612; 912) des ersten Typs vorausgeht, und erste Stufe des zweiten Typs die Dekodierstufe (623; 923) des zweiten Typs ist.

21. Prozessor nach Anspruch 19, ferner umfassend:
Mittel zum Inkrementieren des ersten Versatzparameters des ersten Typs, wenn die erste Anweisung des zweiten Typs die Pipeline (620; 920) des zweiten Typs herunterpropagiert und die erste Anweisung des ersten Typs in der Pipeline (610; 910) des ersten Typs festgefahren ist; und
Mittel zum Dekrementieren des ersten Versatzparameters des ersten Typs, wenn die erste Anweisung des ersten Typs die Pipeline (610; 910) des ersten Typs herunterpropagiert und die erste Anweisung des zweiten Typs in der Pipeline (620; 920) des zweiten Typs festgefahren ist.

22. Prozessor nach Anspruch 19, wobei der erste Versatzparameter des ersten Typs eine relative Position der ersten Anweisung des zweiten Typs und der ersten Anweisung des ersten Typs angibt.

23. Prozessor nach Anspruch 19, ferner mit Mitteln zum Detektieren von Datengefahr für die erste Anweisung des zweiten Typs unter Verwendung des Versatzparameter des zweiten Typs.

24. Prozessor nach Anspruch 19, wobei der erste Versatzparameter des zweiten Typs eine entsprechende Pipeline-Stufe des ersten Typs für die erste Anweisung des zweiten Typs identifiziert, und ferner mit Mitteln zum Vergleichen von Zielregisteradressen in der entsprechenden Pipeline-Stufe des ersten Typs und späteren Pipeline-Stufe des ersten Typs mit einer Quellenregisteradresse der ersten Pipeline-Stufe des zweiten Typs.

25. Prozessor nach Anspruch 19, ferner mit Mitteln zum Festfahren von Pipeline-Stufen des zweiten Typs als Reaktion darauf, dass eine festgefahrene Anweisung des ersten Typs in einer zweiten Pipeline-Stufe des ersten Typs einen zweiten Versatzparameter des ersten Typs aufweist.

26. Prozessor nach Anspruch 25, wobei der zweite Versatzparameter des ersten Typs eine entsprechende Pipeline-Stufe des zweiten Typs für die festgefahrene Anweisung des ersten Typs identifiziert, und ferner mit Mitteln zum Festfahren der entsprechenden Pipeline-Stufe des zweiten Typs und vorausgehender Pipeline-Stufen des zweiten Typs.

27. Prozessor nach Anspruch 19, ferner mit Mitteln zum Festfahren von Pipeline-Stufen des ersten Typs als Reaktion darauf, dass eine festgefahrene Anweisung des zweiten Typs in einer zweiten Pipeline-Stufe des zweiten Typs einen zweiten Versatzparameter des zweiten Typs aufweist.

28. Prozessor nach Anspruch 27, wobei der zweite Versatzparameter des zweiten Typs eine entsprechende Pipeline-Stufe des ersten Typs für die festgefahrene Anweisung des zweiten Typs identifiziert, und ferner mit Mitteln zum Festfahren der Pipeline-Stufen des ersten Typs, die der entsprechenden Pipeline-Stufe des ersten Typs vorausgehen.

29. Prozessor nach Anspruch 19, ferner mit Mitteln zum Streichen von Anweisungen des zweiten Typs als Reaktion darauf, dass eine gestrichene Anweisung des ersten Typs in einer anfänglichen gestrichenen Stufe einen zweiten Versatzparameter des ersten Typs aufweist.

30. Prozessor nach Anspruch 29, wobei der zweite Versatzparameter des ersten Typs eine entsprechende Pipeline-Stufe des zweiten Typs für die anfängliche gestrichene Stufe identifiziert, und ferner mit Mitteln zum Streichen von Anweisungen des zweiten Typs in der entsprechenden Pipeline-Stufe des zweiten Typs und vorausgehenden Pipeline-Stufen des zweiten Typs.

31. Prozessor nach Anspruch 19, ferner mit Mitteln zum Streichen von Pipeline-Anweisungen des ersten Typs als Reaktion darauf, dass eine gestrichene Anweisung des zweiten Typs in einer anfänglichen gestrichenen Stufe einen zweiten Versatzparameter des zweiten Typs aufweist.

32. Prozessor nach Anspruch 31, wobei der zweite Versatzparameter des zweiten Typs eine entsprechende Pipeline-Stufe des ersten Typs für die anfängliche gestrichene Stufe identifiziert, und ferner mit Mitteln zum Streichen von Anweisungen des ersten Typs in Pipeline-Stufen des ersten Typs, die der entsprechenden Pipeline-Stufe des ersten Typs vorausgehen.

33. Prozessor nach Anspruch 19, wobei die Pipeline (610; 910) des ersten Typs eine integer-Pipeline ist und die Pipeline (620; 920) des zweiten Typs eine load/store-Pipeline ist.

34. Prozessor nach Anspruch 19, wobei die Pipeline (610; 910) des ersten Typs eine erste integer-Pipeline ist und die Pipeline (620; 920) des zweiten Typs eine zweite integer-Pipeline ist.

35. Prozessor nach Anspruch 19, wobei die Pipeline (610; 910) des ersten Typs eine erste load/store-Pipeline ist und die Pipeline (620; 920) des zweiten Typs eine zweite load/store-Pipeline ist.

## Revendications

1. Procédé de mise en fonctionnement d'un processeur apte à poursuivre le désalignement entre deux pipelines, comportant un pipeline du premier type (610 ; 910) ayant une pluralité d'étages de pipeline du premier type (611 - 616 ; 911 - 916) et un pipeline du second type (620 ; 920) ayant une pluralité d'étages de pipeline du second type (623 - 626 ; 923 - 926), le procédé consistant à :
émettre simultanément une première instruction du premier type dans un premier étage de pipeline du premier type et une première instruction du second type dans un premier étage de pipeline du second type ;
**caractérisé en ce que** le procédé consiste en outre à :
générer un premier paramètre de désalignement du premier type pour la première instruction du premier type ;
stocker le premier paramètre de désalignement du premier type dans le premier étage de pipeline du premier type ;
faire se propager le premier paramètre de désalignement du premier type à travers le pipeline du premier type avec la première instruction du premier type ;
générer un premier paramètre de désalignement du second type pour la première instruction du second type ;
stocker le premier paramètre de désalignement du second type dans le premier étage de pipeline du second type ; et
faire se propager le premier paramètre de désalignement du second type à travers le pipeline du second type avec la première instruction du second type.

2. Procédé selon la revendication 1, dans lequel le premier paramètre de désalignement du premier type est égal au premier paramètre de désalignement du second type.

3. Procédé selon la revendication 1, dans lequel :
le premier paramètre de désalignement du premier type est égal à zéro lorsque le premier étage du premier type est un étage de décodage du premier type (613 ; 913) et le premier étage du second type est un étage de décodage du second type (623 ; 923) ;
le premier paramètre de désalignement du premier type est égal à un lorsque le premier étage du premier type est un premier étage d'extension du premier type (612 ; 912) et
lorsque le premier étage du second type est l'étage de décodage du second type (623 ; 923) ; et
le premier paramètre de désalignement du premier type est égal à deux lorsque le premier étage du premier type est un second étage d'extension du premier type (611 ; 911) précédant le premier étage d'extension du premier type (612 ; 912) et lorsque le premier étage du second type est l'étage de décodage du second type (623 ; 923).

4. Procédé selon la revendication 1, consistant en outre à :
incrémenter le premier paramètre de désalignement du premier type lorsque les premières instructions du second type se propagent le long du pipeline du second type (620 ; 920) et
lorsque la première instruction du premier type est bloquée dans le pipeline du premier type (610 ; 910) ; et
décrémenter le premier paramètre de désalignement du premier type lorsque la première instruction du premier type se propage le long du pipeline du premier type (610 ; 910) et
lorsque la première instruction du second type est bloquée dans le pipeline du second type (620 ; 920).

5. Procédé selon la revendication 1, dans lequel le premier paramètre de désalignement du premier type indique une position relative de la première instruction du second type et de la première instruction du premier type.

6. Procédé selon la revendication 1, consistant en outre à détecter un risque sur les données pour la première instruction du second type en utilisant le paramètre de désalignement du second type.

7. Procédé selon la revendication 6, dans lequel le premier paramètre de désalignement du second type identifie un étage de pipeline du premier type correspondant pour la première instruction du second type et consistant en outre à comparer des adresses du registre de destination dans l'étage de pipeline du premier type correspondant et ensuite l'étage de pipeline du premier type, à une adresse du registre de source du premier étage de pipeline du second type.

8. Procédé selon la revendication 1, consistant en outre à bloquer des étages de pipeline du second type en réponse à une instruction du premier type bloquée dans un second étage de pipeline du premier type ayant un second paramètre de désalignement du premier type.

9. Procédé selon la revendication 8, dans lequel le second paramètre de désalignement du premier type identifie un étage de pipeline du second type correspondant pour l'instruction du premier type bloquée et consistant en outre à bloquer l'étage de pipeline du second type correspondant et des étages de pipeline du second type précédents.

10. Procédé selon la revendication 1, consistant en outre à bloquer des étages de pipeline du premier type en réponse à une instruction du second type bloquée dans un second étage de pipeline du second type ayant un second paramètre de désalignement du second type.

11. Procédé selon la revendication 10, dans lequel le second paramètre de désalignement du second type identifie un étage de pipeline du premier type correspondant pour l'instruction du second type bloquée et consistant en outre à bloquer les étages de pipeline du premier type précédant l'étage de pipeline du premier type correspondant.

12. Procédé selon la revendication 1, consistant en outre à annuler des instructions du second type en réponse à une instruction du premier type annulée dans un étage annulé initial ayant un second paramètre de désalignement du premier type.

13. Procédé selon la revendication 12, dans lequel le second paramètre de désalignement du premier type identifie un étage de pipeline du second type correspondant pour l'étage annulé initial et consistant en outre à annuler des instructions du second type dans l'étage de pipeline du second type correspondant et des étages de pipeline du second type précédents.

14. Procédé selon la revendication 1, consistant en outre à annuler des instructions de pipeline du premier type en réponse à une instruction du second type annulée dans un étage annulé initial ayant un second paramètre de désalignement du second type.

15. Procédé selon la revendication 14, dans lequel le second paramètre de désalignement du second type identifie un étage de pipeline du premier type correspondant pour l'étage initial annulé et consistant en outre à annuler des instructions du premier type dans des étages de pipeline du premier type précédant l'étage de pipeline du premier type correspondant.

16. Procédé selon la revendication 1, dans lequel le pipeline du premier type (610 ; 910) est un pipeline entier et le pipeline du second type (620 ; 920) est un pipeline de chargement/stockage.

17. Procédé selon la revendication 1, dans lequel le pipeline du premier type (610 ; 910) est un premier pipeline entier et le pipeline du second type (620 ; 920) est un second pipeline entier.

18. Procédé selon la revendication 1, dans lequel le pipeline du premier type (610 ; 910) est un premier pipeline de chargement/stockage et le pipeline du second type (620 ; 920) est un second pipeline de chargement/stockage.

19. Processeur apte à poursuivre le désalignement entre deux pipelines, comprenant :
un pipeline du premier type (610 ; 910) ayant une pluralité d'étages de pipeline du premier type (611 - 616 ; 911 - 916) ;
un pipeline du second type (620 ; 920) ayant une pluralité d'étages de pipeline du second type (623 - 626 ; 923 - 926) ;
un moyen permettant d'envoyer simultanément une première instruction du premier type dans un premier étage de pipeline du premier type et une première instruction du second type dans un premier étage de pipeline du second type ;
**caractérisé en ce que** le processeur comprend en outre :
un moyen destiné à générer un premier paramètre de désalignement du premier type pour la première instruction du premier type ;
un moyen pour stocker le premier paramètre de désalignement du premier type dans le premier étage de pipeline du premier type ;
un moyen pour faire se propager le premier paramètre de désalignement du premier type à travers le pipeline du premier type avec la première instruction du premier type ;
un moyen pour générer un premier paramètre de désalignement du second type pour la première instruction du second type ;
un moyen pour stocker le premier paramètre de désalignement du second type dans le premier étage de pipeline du second type ; et
un moyen pour faire se propager le premier paramètre de désalignement du second type à travers le pipeline du second type avec la première instruction du second type.

20. Processeur selon la revendication 19, dans lequel :
le premier paramètre de désalignement du premier type est égal à zéro lorsque le premier étage du premier type est un étage de décodage du premier type (613 ; 913) et lorsque le premier étage du second type est un étage de décodage du second type (623 ; 923) ;
le premier paramètre de désalignement du premier type est égal à un lorsque le premier étage du premier type est un premier étage d'extension du premier type (612 ; 912) et
lorsque le premier étage du second type est l'étage de décodage du second type (623 ; 923) ; et
le premier paramètre de désalignement du premier type est égal à deux lorsque le premier étage du premier type est un second étage d'extension du premier type (611 ; 911) précédant le premier étage d'extension du premier type (612 ; 912) et le premier étage du premier type est le second étage de décodage du second type (623, 923).

21. Processeur selon la revendication 19, comprenant en outre :
un moyen pour incrémenter le premier paramètre de désalignement du premier type lorsque les premières instructions du second type se propagent le long du pipeline du second type (620 ; 920) et lorsque la première instruction du premier type est bloquée dans le pipeline du premier type (610 ; 910) ; et
un moyen pour décrémenter le premier paramètre de désalignement du premier type lorsque la première instruction du premier type se propage le long du pipeline du premier type (610 ; 910) et lorsque la première instruction du second type est bloquée dans le second pipeline du second type (620 ; 920).

22. Processeur selon la revendication 19, dans lequel le premier paramètre de désalignement du premier type indique une position relative de la première instruction du second type et de la première instruction du premier type.

23. Processeur selon la revendication 19, comprenant en outre un moyen pour détecter un risque sur les données dans le cas de la première instruction du second type en utilisant le paramètre de désalignement du second type.

24. Processeur selon la revendication 19, dans lequel le premier paramètre de désalignement du second type identifie un étage de pipeline du premier type correspondant pour la première instruction du second type et comprenant en outre un moyen pour comparer des adresses d'un registre de destination dans l'étage de pipeline du premier type correspondant puis dans un étage de pipeline du premier type à une adresse de registre de source du premier étage de pipeline du second type.

25. Processeur selon la revendication 19, comprenant en outre un moyen destiné à bloquer des étages de pipeline du second type en réponse à une instruction du premier type bloquée dans un second étage de pipeline du premier type ayant un second paramètre de désalignement du premier type.

26. Processeur selon la revendication 25, dans lequel le second paramètre de désalignement du premier type identifie un étage de pipeline du second type correspondant pour l'instruction du premier type bloquée et comprenant en outre un moyen pour bloquer l'étage de pipeline du second type correspondant et des étages de pipeline du second type précédents.

27. Processeur selon la revendication 19, comprenant en outre un moyen destiné à bloquer des étages de pipeline du premier type en réponse à une instruction du second type bloquée dans un second étage de pipeline du second type ayant un second paramètre de désalignement du second type.

28. Processeur selon la revendication 27, dans lequel le second paramètre de désalignement du second type identifie un étage de pipeline du premier type correspondant pour l'instruction du second type bloquée et comprenant en outre un moyen pour produire un blocage des étages de pipeline du premier type précédant l'étage de pipeline du premier type correspondant.

29. Processeur selon la revendication 19, comprenant en outre un moyen pour annuler des instructions du second type en réponse à une instruction du premier type annulée dans un étage annulé initial ayant un second paramètre de désalignement du premier type.

30. Processeur selon la revendication 29, dans lequel le second paramètre de désalignement du premier type identifie un étage de pipeline du second type correspondant pour l'étage annulé initial et comprenant en outre un moyen pour annuler des instructions du second type dans l'étage de pipeline du second type correspondant et des étages de pipeline du second type précédents.

31. Processeur selon la revendication 19, comprenant en outre un moyen pour annuler des instructions de pipeline du premier type en réponse à une instruction du second type annulée dans un étage annulé initial ayant un second paramètre de désalignement du second type.

32. Processeur selon la revendication 31, dans lequel le second paramètre de désalignement du second type identifie un étage de pipeline du premier type correspondant destiné à l'étage initial annulé et comprenant en outre un moyen pour annuler des instructions du premier type dans des étages de pipeline du premier type précédant l'étage de pipeline du premier type correspondant.

33. Processeur selon la revendication 19, dans lequel le pipeline du premier type (610 ; 910) est un pipeline entier et le pipeline du second type (620 ; 920) est un pipeline de chargement/stockage.

34. Processeur selon la revendication 19, dans lequel le pipeline du premier type (610 ; 910) est un premier pipeline entier et le pipeline du second type (620 ; 920) est un second pipeline entier.

35. Processeur selon la revendication 19, dans lequel le pipeline du premier type (610 ; 910) est un premier pipeline de chargement/stockage et le pipeline du second type (620 ; 920) est un second pipeline de chargement/stockage.
